# EUROPEAN PATENT SPECIFICATION

(11) **EP 4 515 954 B1**
(45) Date of publication and mention of the grant of the patent: **25.02.2026**
(21) Application number: 23814070.1
(22) Date of filing: 03.11.2023
(51) Int. Cl.: H04W 48/10, H04W 48/18, H04W 88/02

(54) **NETWORK SELECTION WITH SIGNAL-LEVEL CRITERIA AND OPERATOR CONTROLLED SIGNAL THRESHOLD CRITERIA**
NETZWERKAUSWAHL MIT SIGNALPEGELKRITERIEN UND BEDIENERGESTEUERTEN SIGNALSCHWELLENKRITERIEN
SÉLECTION DE RÉSEAU AVEC DES CRITÈRES DE NIVEAU DE SIGNAL ET DES CRITÈRES DE SEUIL DE SIGNAL COMMANDÉS PAR UN OPÉRATEUR

(30) Priority: 04.11.2022 US 202263382341 P
(43) Date of publication of application: 05.03.2025
(73) Proprietor: Google LLC, Mountain View, CA 94043 (US)
(72) Inventor: HUANG FU, Chien-Chun, Taipei, 105 (TW); CHUANG, Poying, Taipei, 105 (TW); CHANG, Chi-Ju, Taipei, 105 (TW)
(74) Representative: Marks & Clerk GST
(86) International application number: PCT/US2023/078601
(87) International publication number: WO 2024/097933

(56) References cited:
- DEUTSCHE TELEKOM ET AL: "Signal level Enhanced Network Selection", vol. SA WG1, no. Electronic Meeting; 20210823 - 20210902, 3 September 2021 (2021-09-03), XP052052991, Retrieved from the Internet <URL:https://ftp.3gpp.org/tsg_sa/WG1_Serv/TSGS1_95e_EM_August2021/Docs/S1-213329.zip S1-213329.doc> [retrieved on 20210903]
- VISHNU PREMAN ET AL: "Discussion on Signal Level Enhanced Network Selection", vol. 3GPP CT 1, no. Online; 20220818 - 20220826, 11 August 2022 (2022-08-11), XP052185551, Retrieved from the Internet <URL:https://www.3gpp.org/ftp/tsg_ct/WG1_mm-cc-sm_ex-CN1/TSGC1_137e/Docs/C1-224713.zip C1-224713-Discussion on CT1 Aspects of Signal Level Enhanced Network Selec_vp.docx> [retrieved on 20220811]
- HUAWEI ET AL: "Discussion on RAN Aspects of Signal Level Enhanced Network Selection", vol. RAN WG2, no. Electronic; 20221010 - 20221019, 30 September 2022 (2022-09-30), XP052263843, Retrieved from the Internet <URL:https://ftp.3gpp.org/tsg_ran/WG2_RL2/TSGR2_119bis-e/Docs/R2-2210529.zip R2-2210529-was R2-2208490-Discussion on RAN Aspects of Signal Level Enhanced Network Selection.docx> [retrieved on 20220930]
- HUAWEI ET AL: "[AT119bis-e][014][NR18] SENSE", vol. RAN WG2, no. Electronic; 20221010 - 20221019, 21 October 2022 (2022-10-21), XP052264229, Retrieved from the Internet <URL:https://ftp.3gpp.org/tsg_ran/WG2_RL2/TSGR2_119bis-e/Docs/R2-2210985.zip R2-2210985_ Report of [014][NR18] SENSE.docx> [retrieved on 20221021]
- REINHARD LAUSTER ET AL: "Signal level enhanced network selection procedures for PLMN selection", vol. 3GPP CT 1, no. Athens, GR; 20230227 - 20230303, 17 February 2023 (2023-02-17), XP052238406, Retrieved from the Internet <URL:https://www.3gpp.org/ftp/tsg_ct/WG1_mm-cc-sm_ex-CN1/TSGC1_140_Athens/Docs/C1-230064.zip C1-230064_SENSE_procedures_PLMN.docx> [retrieved on 20230217]

## Description

### TECHNICAL FIELD

Aspects of the present disclosure relate generally to wireless communication and mechanisms for network selection in a wireless communication system.

### DESCRIPTION OF THE RELATED TECHNOLOGY

A public land mobile network (PLMN) supports at least one radio access technologies (RAT) so that user equipment (UE) can communicate using network nodes of the PLMN. A UE includes at least one wireless communication apparatus (sometimes referred to as a communication module, communication unit, wireless communication interface, communication chipset, or the like) configured to transmit or receive radio frequency (RF) transmissions to or from a network node using a particular RAT. A network node implements one of the RATs supported by the PLMN. Examples of RATs include fourth-generation (4G) systems such as Long Term Evolution (LTE) systems, fifth-generation (5G) systems which also may be referred to as New Radio (NR) systems, and future sixth-generation (6G) systems. The 3^{rd} Generation Partnership Project (3GPP) standards body or other standards-setting organizations define various RATs.

A UE with a home PLMN (HPLMN) of a particular wireless carrier may be permitted to roam on other PLMNs (such as one or more visiting PLMN (VPLMNs)) of different wireless carriers. Network selection (which also may be referred to as PLMN selection) refers to a procedure by which a UE selects a PLMN for registration. The UE performs a network selection at various times, such as when the UE first turns on, recovers from an out-of-coverage condition, after a manual user input requesting network selection, as a result of mobility of the UE, or periodically during normal operation. The UE typically performs a PLMN selection based on a PLMN prioritization before selecting a serving cell for service. A PLMN selector list includes PLMN identifiers (IDs) and indicates the priority order of one or more PLMNs above other PLMNs. The UE observes broadcast information from nearby cells to determine the PLMNs operating in an area. Using the PLMN selector list, the UE selects one PLMN (such as the HPLMN) having a higher priority than other PLMNs (such as the VPLMNs). When the UE is currently roaming in a VPLMN or other lower priority PLMN, a UE periodically repeats the PLMN selection in an attempt to select a higher priority PLMN.

After selecting a PLMN, the UE selects a serving cell from among candidate cells in the selected PLMN. Cell selection and reselection (collectively referred to as cell selection) refers to a process in which the UE selects a serving cell from among candidate cells. Because the PLMN selection occurs prior to the cell selection, the PLMN selection limits which candidate cells (i.e., those in the selected PLMN) are available for cell selection. During cell selection, the UE selects a suitable serving cell based on idle mode measurements of signal metrics and cell selection criteria. The cell selection criteria are typically broadcast in a system information block (SIB1) from each cell. Thus, the cell selection criteria may be referred to as cell-provided cell selection criteria. In some implementations, the cell-provided cell selection criteria might include a cell signal-level threshold. For example, the cell signal-level threshold might be a minimum required receiver (RX) level in the cell or a minimum required quality level in the cell.

The 3GPP has proposed a signal-level network selection mechanism (which may be referred to as signal-level enhanced network selection (SENSE)). Using the signal-level network selection mechanism, an operator (such as a wireless carrier or network operator) can configure access-technology-specific criteria for network selection. The access-technology-specific criteria also may be referred to as operator-provided criteria or operator controlled signal threshold criteria. The access-technology-specific criteria may be stored in a memory of the UE for use during PLMN selection. The access-technology-specific criteria include access-technology-specific signal-level thresholds that reflect an operator prioritization of various RATs. For example, the access-technology-specific criteria might be useful for Internet of Things (IoT) stationary devices or other types of UEs to prioritize a particular access technology. Furthermore, the access-technology-specific criteria might accommodate multiple PLMNs, which enables network operators to collaborate more freely or support greater roaming flexibility. The access-technology-specific signal-level thresholds might be in addition to, or in lieu of, PLMN prioritization.

The various network selection mechanisms and their criteria (such as the PLMN selector list, the cell-provided cell selection criteria, or the access-technology-specific criteria) might conflict with each other or produce unpredictable PLMN selection results. Alternatively or additionally, depending on which type of PLMN (such as HPLMN or VPLMN) is currently serving the UE, the UE might periodically perform a subsequent PLMN selection using the PLMN selector list that results in the UE selecting a different PLMN than would be selected by the access-technology-specific criteria.

DEUTSCHE TELEKOM ET AL: "Signal level Enhanced Network Selection", 3GPP DRAFT; S1-213329, 3GPP, vol. SA WG1, no. Electronic Meeting; 20210823-20210902, XP052052991 (D1) relates to procedures in which the UE selects and attempts registration on PLMNs. In D1, for UEs supporting any, or a combination, of NB-IoT, GERAN EC-GSM-IoT and Category M1 or M2 of E-UTRA, the 5G system shall support a mechanism to have an Operator controlled signal threshold per access technology on the USIM to be used for network selection. The signal threshold is specific for a certain Access Technology and shall apply to all PLMNs with the corresponding access technology combinations. In D1, if the Operator controlled signal threshold per access technology is set on the USIM, the UE shall perform the periodic network selection procedure considering all PLMNs, of higher or lower priority than the current PLMN, with the following conditions: the UE shall select a higher priority PLMN/access technology combination if the target PLMN's access technology signal quality is equal to or higher than the Operator controlled signal threshold per access technology.

### SUMMARY

The invention is defined in the appended set of claims.

The systems, methods, and devices of this disclosure each have several innovative aspects, no single one of which is solely responsible for the desirable attributes disclosed herein.

One innovative aspect of the subject matter described in this disclosure can be implemented in a method for network selection by a user equipment (UE). The method includes obtaining access-technology-specific criteria that include at least a first access-technology-specific signal-level threshold for a first access technology. The method includes selecting one or more public land mobile networks (PLMNs) that include one or more candidate cells having signal metrics satisfying network selection criteria that is based, at least in part, on the first access-technology-specific signal-level threshold for the first access technology. The method includes registering with a first PLMN of the one or more PLMNs. And the method includes setting a condition for a subsequent PLMN selection after the registering with the first PLMN.

Another innovative aspect of the subject matter described in this disclosure can be implemented in a method for network selection by a UE. The method includes obtaining access-technology-specific criteria that include access-technology-specific signal-level thresholds for each of a plurality of access technologies. The method includes obtaining cell-provided cell selection criteria that include a cell signal-level threshold. And the method includes selecting a public land mobile network (PLMN) for registration by the UE. The selecting the PLMN includes, when the UE is in a first area in which all candidate cells are using one of the plurality of access technologies, selecting and registering with a first PLMN of one or more PLMNs that include one or more candidate cells having signal metrics satisfying an access-technology-specific signal-level threshold for a respective access technology of the each of the one or more candidate cells. The selecting the PLMN includes, when the UE is in a second area in which at least one candidate cell is using an access technology for which an access-technology-specific signal-level threshold is not included in the access-technology-specific criteria, selecting and registering with a second PLMN based on a PLMN prioritization and that includes the at least one candidate cell having signal metrics satisfying the cell-provided cell selection criteria.

Another innovative aspect of the subject matter described in this disclosure can be implemented in a method for network selection by a UE. The method includes selecting a serving cell from among a plurality of candidate cells, wherein the serving cell has a highest signal metric from among signal metrics for the plurality of candidate cells, where the plurality of candidate cells includes candidate cells from different public land mobile networks (PLMNs) having equal or no prioritization in a signal-quality criteria. The method includes selecting a first PLMN that includes the serving cell. And the method includes registering the UE with the first PLMN.

Another innovative aspect of the subject matter described in this disclosure can be implemented in a UE. The UE includes a communication unit and a processing system. The processing system is configured to control the communication unit to implement any one of the above-referenced methods.

Details of one or more implementations of the subject matter described in this disclosure are set forth in the accompanying drawings and the description below. Other features, aspects, and advantages will become apparent from the description, the drawings, and the claims. Note that the relative dimensions of the following figures may not be drawn to scale.

### BRIEF DESCRIPTION OF THE DRAWINGS

**Figure 1** shows a pictorial diagram conceptually illustrating an example wireless communication system.
**Figure 2** shows a pictorial diagram conceptually illustrating an example public-land mobile network (PLMN) selection.
**Figure 3A** shows a block diagram conceptually illustrating an example PLMN selector list and cell-provided cell selection criteria for a conventional PLMN selection mechanism.
**Figure 3B** shows a block diagram conceptually illustrating example access-technology-specific criteria for a signal-level enhanced network selection (SENSE) mechanism.
**Figure 3C** shows a block diagram conceptually illustrating example cell-provided cell selection criteria for a signal-quality centric network selection mechanism.
**Figure 4** shows a flowchart of an example process, performed by a user equipment (UE), for selecting among a variety of network selection mechanisms.
**Figure 5** shows a flowchart of an example process, performed by a UE, for coordinating network selection mechanisms.
**Figure 6** shows a flowchart of an example process, performed by a UE, for implementing access-technology-specific signal-level thresholds and cell signal-level thresholds.
**Figure 7** shows a flowchart of an example process, performed by a UE, for implementing a signal-quality centric network selection mechanism.
**Figure 8** shows a flowchart of an example process, performed by a UE, for managing a condition for periodic network selection.
**Figure 9** shows a flowchart of another example process, performed by a UE, for managing a condition for periodic network selection.
**Figure 10** shows a flowchart of an example process, performed by a UE, in which access-technology-specific criteria might not include an access-technology-specific signal-level threshold for **a** RAT of a candidate cell.
**Figure 11** shows a flowchart of an example process, performed by a UE, for signal-level network selection.
**Figure 12** shows a flowchart of an example process in which a UE might perform either a signal-level network selection or a conventional PLMN selection.
**Figure 13** is a flowchart of an example process, performed by a UE, for a signal-quality centric network selection.
**Figure 14** shows a block diagram of an example wireless communication device that supports cell reselection based on service relationship.

Like reference numbers and designations in the various drawings indicate like elements.

### DETAILED DESCRIPTION

The following description is directed to certain implementations for the purpose of describing the innovative aspects of this disclosure. However, a person having ordinary skill in the art will readily recognize that the teachings herein can be applied in a multitude of different ways. Some of the examples in this disclosure are based on wireless communication according to the 3^{rd} Generation Partnership Project (3GPP) wireless standards, such as the 4G LTE and 5G NR standards. However, the described implementations can be implemented in any device, system, or network that is capable of transmitting and receiving radio frequency signals according to any of the wireless communication standards, including any of the Institute of Electrical and Electronics Engineers (IEEE) 802.11, 802.15, or 802.16 wireless standards, or other known signals that are used to communicate within a wireless, cellular, or internet of things (IOT) network, such as a system utilizing 3G, 4G, 5G, WiFi or future radio technology.

Various aspects of this disclosure relate to network selection. Network selection refers to a procedure by which a user equipment (UE) selects a public-land mobile network (PLMN) and a serving cell for service. In a conventional network selection procedure, the UE selects a PLMN (referred to as PLMN selection) based on a PLMN prioritization. A PLMN selector list includes a list of preferred PLMNs in priority order. In some cases, each entry of the PLMN selector list can indicate a combination of a PLMN and a radio access technology (RAT) type. During PLMN selection at switch-on or recover from lack of coverage, the UE typically selects a PLMN that has the highest priority among available PLMNs. After selecting a highest priority PLMN, the UE selects a cell (referred to as cell selection) from among candidate cells in the selected PLMN using cell-provided cell selection criteria. The cell-provided cell selection criteria might include a cell signal-level threshold configured by the PLMN. Examples of a cell signal-level threshold include a minimum Reference Signal Received Power (RSRP) value (sometimes referred to as a Qrxlevmin threshold), a minimum Reference Signal Received Quality (RSRQ) value (sometimes referred to as a Qqualmin threshold), among other examples. The UE selects the serving cell by comparing signal metrics of candidate cells in the selected PLMN to the cell signal-level threshold.

3GPP has proposed a signal-level network selection mechanism (which may be referred to as Signal-level Enhanced Network Selection (SENSE)) to enable a UE to select a PLMN and serving cell based on access-technology-specific criteria. The access-technology-specific criteria includes access-technology-specific signal-level thresholds for various access technologies (also referred to as radio access technologies (RATs)). Examples of access technologies include 5G NR, E-UTRAN, UTRAN, non-terrestrial network (NTN) including Satellite, and GSM, among other examples. The access-technology-specific signal-level thresholds (sometimes also referred to as RAT-specific signal-level thresholds or operator-controlled signal thresholds per access technology) might be configured and enabled by a network operator for a UE. The access-technology-specific criteria can include at least a first access-technology-specific signal-level threshold for a first access technology (or for a first combination of PLMN and RAT) and a second access-technology-specific signal-level threshold for a second access technology (or for a second combination of PLMN and RAT). In some implementations, a network selection list (similar to the PLMN selector list) can include entries for various combinations of PLMN and RAT and a corresponding access-technology-specific signal-level threshold. During a PLMN selection, the UE can compare signal metrics of each candidate cell with the access-technology-specific signal-level threshold for the access technology of the candidate cell. If a PLMN and RAT combination has at least one candidate cell that satisfies the access-technology-specific signal-level threshold, the UE selects that PLMN and RAT. A candidate cell is said to satisfy the access-technology-specific signal-level threshold when a signal metric of the candidate cell is equal to or higher than the access-technology-specific signal-level threshold. After selecting the PLMN and RAT, the UE proceeds with a comparison of signal metrics to select a serving cell from among candidate cells of the selected PLMN and RAT and that satisfy the access-technology-specific signal-level threshold.

In an alternative network selection mechanism (which may be referred to as signal-quality centric network selection), cell selection is prioritized based on signal quality rather than PLMN. The signal-quality centric network selection mechanism enables a UE to select a serving cell (and by extension, select the PLMN of the serving cell) based on an order of decreasing signal quality of candidate cells from among multiple PLMNs. A UE might select a serving cell (and its PLMN) from among candidate cells in multiple PLMNs having equal or no priority. The UE might select the serving cell using a signal-quality criteria (such as an order of decreasing signal quality) rather than using cell-provided cell selection criteria or access-technology-specific criteria. In some implementations, the signal-quality criteria cause the UE disregard or disable PLMN prioritization. Rather than performing a PLMN selection and a cell selection as separate steps, the UE might select the serving cell based on the signal-quality criteria and then register to the PLMN that includes the selected serving cell.

This disclosure provides systems, methods, and apparatuses for network selection. In various aspects, the disclosure enables PLMN selection and cell selection based on various network selection mechanisms and their criteria (such as the PLMN selector list, the cell-provided cell selection criteria, the access-technology-specific criteria, or the signal-quality centric criteria). A UE can use the access-technology-specific criteria to select a PLMN and serving cell when the access-technology-specific criteria is configured and enabled in the UE. In some implementations, after selecting a PLMN using the access-technology-specific criteria, the UE can select a serving cell using a combination of the cell-provided cell selection criteria and the access-technology-specific criteria. For example, the UE can use a minimum, maximum, average, or union of the cell signal-level threshold in the cell-provided cell selection criteria and the access-technology-specific signal-level threshold in the access-technology-specific criteria for a particular access technology.

After the UE selects the PLMN and the serving cell using the access-technology-specific criteria, the UE might adjust how it performs periodic network selection (reselection). Typically, a UE might periodically perform a subsequent PLMN selection to search for a higher priority PLMN in the PLMN selector list, particularly when the UE is roaming on a VPLMN. The subsequent PLMN selection may be referred to as periodic network selection or automatic network selection because it typically is triggered by a timer. Because the intent of the access-technology-specific criteria or signal-quality criteria is to enable the UE to select a PLMN and a serving cell using operator-controlled access-technology-specific signal-level thresholds, the UE might modify (or set or configure) the conditions for an automatic periodic PLMN selection that would otherwise attempt to select a higher-priority PLMN. For example, in some implementations, the UE disables, disregards, or defers a subsequent PLMN selection (that would otherwise occur) when the selected serving cell still satisfies the access-technology-specific criteria even if the current PLMN has a lower priority than another PLMN in the PLMN selector list. Alternatively, or additionally, the UE might enable a timer for automatic network selection when a current signal metric of the serving cell becomes lower than the access-technology-specific signal-level threshold. In some aspects, the conditions for periodic network selection might depend on whether the selected serving cell is in a lower priority PLMN (such as a VPLMN) or a higher priority PLMN (such as a HPLMN). Thus, the UE can consider the priority of the PLMN containing the current serving cell when determining whether to perform a subsequent PLMN selection.

In some aspects, a UE might determine that the access-technology-specific criteria are incomplete when it does not include an access-technology-specific signal-level threshold for one or more RATs in an area. In some implementations, when there is no access-technology-specific signal-level threshold for a particular RAT, the UE might disregard that RAT (such as setting a very high signal-level threshold or setting a very low priority value for that RAT). Alternatively, the UE might use the cell-provided cell selection criteria for that RAT when an access-technology-specific signal-level threshold is missing for that RAT. In another alternative, the UE might determine that the access-technology-specific criteria are incorrectly configured and might revert to a conventional PLMN selection and cell selection for that area (such as a location area or tracking area).

In some aspects, a UE might be configured for a signal-quality centric network selection mechanism that uses signal-quality criteria irrespective of PLMN priority. The UE can use the signal-quality criteria to select a RAT and serving cell based on signal quality metrics rather than PLMN prioritization, cell-provided cell selection criteria, or access-technology-specific criteria. In some implementations of the signal-quality centric network selection mechanism, the UE selects a serving cell solely based on the signal quality of all available RATs (or from a list of allowed RATs and PLMNs). In some implementations of the signal-quality centric network selection mechanism, the UE selects a serving cell based on a predefined RAT priority (which might be stored in the UE, mobile equipment (ME), or subscriber identity module (SIM)). For example, the predefined RAT priority might give a higher priority to 5G NR over LTE, higher priority to LTE over 3G, and higher priority to 2G over 3G, and so on. After selecting the serving cell, the UE registers to the PLMN that includes the selected serving cell. The UE might disable a periodic network selection or set conditions for a subsequent PLMN selection.

Particular implementations of the subject matter described in this disclosure can be implemented to realize one or more of the following potential advantages. Absent the techniques of this disclosure, a UE might experience an undesirable ping-pong effect caused by repeated differing subsequent PLMN selections or incur unnecessary power consumption due to selecting a suboptimal network. In some aspects of this disclosure, a UE can prevent ping-pong reselection between two or more PLMNs or serving cells due to conflicting thresholds in the access-technology-specific criteria and the cell-provided cell selection criteria-provided cell selection criteria. There might be instances when the access-technology-specific criteria fail to include an access-technology-specific signal-level threshold for an access technologies available in an area, which might also lead to suboptimal network selection.

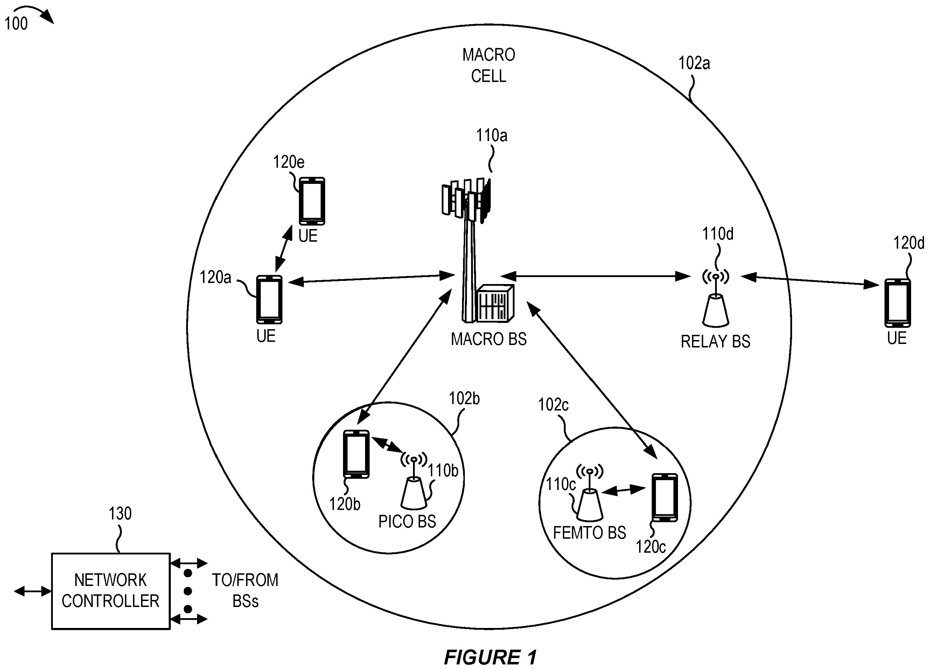

**Figure 1** is a block diagram conceptually illustrating an example of a wireless communication system 100. A wireless communication system (which also may be referred to as a wireless communication network) might include one or more radio access networks (RANs) that provide access for a UE to communicate with other nodes in the wireless communication system. A radio access network (RAN, sometimes also referred to as a radio network or access network) includes a number of base stations (BSs) that can support communication for a number of UEs. Different types of base stations may be referred to as a NodeB, an LTE evolved NodeB (eNB), a next generation NodeB (gNB), an access point (AP), a radio head, a transmit-receive point (TRP), among other examples, depending on the wireless communication standard that the base station supports. One or more LTE base stations might make up an LTE RAN. The LTE RAN (sometimes also referred to as an LTE network) provides access to the wireless communication system. Similarly, one or more 5G base stations might make up a 5G New Radio (NR) RAN, and may be referred to as a 5G NR network that provides access to the wireless communication system. The LTE network and 5G NR network are two examples of a radio access network that can be used to communicate to a core network of the wireless communication system.

The example wireless communication system 100 might be an LTE RAN or some other RAN, such as a 5G or NR RAN. The wireless communication system 100 might include a number of BSs 110 (shown as BS 110a, BS 110b, BS 110c, and BS 110d) and other network entities. A BS is an entity that communicates with user equipment (UEs) and also may be referred to as a base station, a NR BS, a Node B, a gNB, a 5G node B (NB), an access point, a transmit receive point (TRP), or the like. Each BS might provide communication coverage for a particular geographic area. In 3GPP, the term "cell" might refer to a coverage area of a BS, a BS subsystem serving this coverage area, or a combination thereof, depending on the context in which the term is used. Within each cell, the base station might operate different frequencies for radio frequency communication between the UE and the base station. A UE can communicate with a base station via the downlink (DL) and uplink (UL). The DL (or forward link) refers to the communication link from the BS to the UE, and the UL (or reverse link) refers to the communication link from the UE to the BS.

A BS might provide communication coverage for a macro cell, a pico cell, a femto cell, another type of cell, or a combination thereof. A macro cell might cover a relatively large geographic area (for example, several kilometers in radius) and might allow unrestricted access by UEs with service subscription. A pico cell might cover a relatively small geographic area and might allow unrestricted access by UEs with service subscription. A femto cell might cover a relatively small geographic area (for example, a home) and might allow restricted access by UEs having association with the femto cell (for example, UEs in a closed subscriber group (CSG)). A BS for a macro cell may be referred to as a macro BS. A BS for a pico cell may be referred to as a pico BS. A BS for a femto cell may be referred to as a femto BS or a home BS. In the example shown in Figure 1, a BS 110a might be a macro BS for a macro cell 102a, a BS 110b might be a pico BS for a pico cell 102b, and a BS 110c might be a femto BS for a femto cell 102c. A BS might support one or multiple (for example, three) cells. The terms "eNB," "base station," "NR BS," "gNB," "TRP," "AP," "node B," "5G NB," and "cell" may be used interchangeably herein.

In some examples, a cell might not necessarily be stationary, and the geographic area of the cell might move according to the location of a mobile BS. In some examples, the BSs might be interconnected to one another as well as to one or more other BSs or network nodes (not shown) in the wireless communication system 100 through various types of backhaul interfaces, such as Integrated Access and Backhaul (IAB), a direct physical connection, a virtual network, or a combination thereof using any suitable transport network.

A RAN also might include relay stations. A relay station is an entity that can receive a transmission of data from an upstream station (for example, a BS or a UE) and send a transmission of the data to a downstream station (for example, a UE or a BS). A relay station also might be a UE that can relay transmissions for other UEs. In the example shown in Figure 1, a relay station 110d might communicate with macro BS 110a and a UE 120d in order to facilitate communication between BS 110a and UE 120d. A relay station also may be referred to as a relay BS, a relay base station, or a relay, among other examples.

The wireless communication system 100 might include a heterogeneous network that includes BSs of different types, for example, macro BSs, pico BSs, femto BSs, relay BSs, among other examples. These different types of BSs might have different transmit power levels, different coverage areas, and different impacts on interference in wireless communication system 100. For example, macro BSs might have a high transmit power level (for example, 5 to 40 Watts) whereas pico BSs, femto BSs, and relay BSs might have lower transmit power levels (for example, 0.1 to 2 Watts).

A network controller 130 might couple to a set of BSs and can provide coordination and control for these BSs. The network controller 130 might communicate with the BSs via a backhaul. The BSs also might communicate with one another, for example, directly or indirectly via a wireless or wireline backhaul.

UEs 120 (for example, 120a, 120b, 120c, 120d, 120e) can be dispersed throughout wireless communication system 100, and each UE might be stationary or mobile. A UE also may be referred to as an access terminal, a terminal, a mobile station, a subscriber unit, or a station, among other examples. A UE might be a cellular phone (for example, a smart phone), a personal digital assistant (PDA), a wireless modem, a wireless communication device, a handheld device, a laptop computer, a wireless local loop (WLL) station, a tablet, a camera, a gaming device, a netbook, a smartbook, an ultrabook, a medical device or equipment, biometric sensors/devices, wearable devices (smart watches, smart clothing, smart glasses, smart wrist bands, smart jewelry (for example, smart ring, smart bracelet)), an entertainment device (for example, a music or video device, or a satellite radio), a vehicular component or sensor, smart meters/sensors, industrial manufacturing equipment, a global positioning system device, or any other suitable device that is configured to communicate via a wireless or wired medium.

Some UEs are machine-type communication (MTC) or evolved or enhanced machine-type communication (eMTC) UEs. MTC and eMTC UEs include, for example, robots, drones, remote devices, sensors, meters, monitors, location tags, among other examples, that can communicate with a base station, another device (for example, remote device), or some other entity. A wireless node might provide, for example, connectivity for or to a network (for example, a wide area network such as Internet or a cellular network) via a wired or wireless communication link. Some UEs are Internet-of-Things (IoT) devices or might be implemented as NB-IoT (narrowband internet of things) devices. Some UEs are Customer Premises Equipment (CPE). UE 120 might be included inside a housing that houses components of UE 120, such as processor components, memory components, similar components, or a combination thereof.

In general, any number of RANs can be deployed in a given geographic area. Each RAN might support a particular RAT and might operate on one or more frequencies. A RAT also may be referred to as a radio technology, an air interface, among other examples. A frequency also may be referred to as a carrier, a frequency channel, among other examples.

A UE performs a PLMN selection to select a PLMN for registration. In a conventional network selection mechanism, the UE selects the PLMN and RAN based on priority before performing a cell selection based on cell-provided cell selection criteria. The UE limits cell selection to candidate cells that are in the in the selected PLMN and RAN. Cell selection or reselection might involve selection of a candidate cell that has the highest signal strength or signal quality that the UE can measure from among the candidate cells in the selected PLMN/RAN. The UE might monitor signal strength and signal quality of multiple frequencies to select the serving cell from among the candidate cells in the selected PLMN. In some implementations, a UE might receive a system information broadcast (SIB) message or other type of message that can be populated with the PLMN identifier (PLMN ID) and cell-provided cell selection criteria. The UE might camp on a selected serving cell to register with the PLMN. The UE might perform a tracking area registration, so the wireless communication system knows which tracking area to page the UE for mobile-terminated communications. Additionally, the UE can establish a radio resource control (RRC) relationship with the serving cell to obtain configuration or other information about the wireless communication system. A UE is said to be camped on a serving cell when the UE has registered with the wireless communication and established a basic RRC relationship with the cell. The serving cell is available for mobile originated (MO) or mobile terminated (MT) communication between the UE and the wireless communication system.

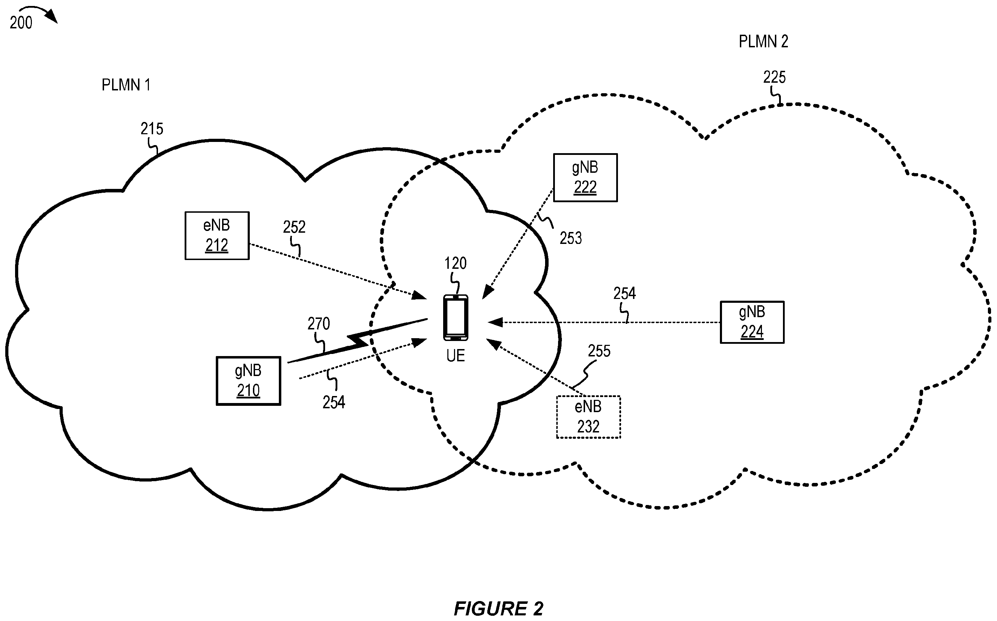

**Figure 2** shows a pictorial diagram 200 conceptually illustrating an example PLMN selection. When selecting a PLMN, the UE usually selects a network that has the highest priority among available PLMNs. There are two modes of network selection: automatic network selection mode and manual network selection mode. In automatic network selection mode, the UE searches for available networks prioritized in the following order (of decreasing priority): HPLMN (or Equivalent HPLMN); User Controlled PLMN (UPLMN); Operator Controlled PLMN (OPLMN); Other PLMN/access technology combinations with received high quality signal in random order; Other PLMN/access technology combinations in order of decreasing signal quality: and finally, PLMNs supporting disaster roaming. After selecting the PLMN and RAN, the UE selects a serving cell in the selected PLMN and RAN.

When selecting a serving cell, the UE usually selects a serving cell that has the highest signal metric (such as signal strength or signal quality) measured by the UE, provided that the signal metric satisfies cell-provided cell selection criteria. Cell-provided cell selection criteria typically include one or more cell signal-level thresholds for one or more signal metrics. Cell-provided cell selection criteria also may be referred to as network-provided parameters, network-broadcasted thresholds, cell selection/reselection criterion, or similar terms. Examples of the cell signal-level thresholds might include a minimum RSRP value (sometimes referred to as a Qrxlevmin threshold), a minimum RSRQ value (sometimes referred to as a Qqualmin threshold), a minimum signal-to-interference-plus noise ratio (SINR), or a minimum received signal strength indicator (RSSI), among other examples. In some implementations, the cell-provided cell selection criteria also can include offset values (such as a Qrxlevminoffset value and a Qqualminoffset value). A UE can use the offset values to modify the cell signal-level thresholds or to modify the measured signal metrics of candidate cells before comparing them to the cell signal-level thresholds. For example, a UE might use the offset values when performing a periodic network selection if the UE is roaming on a VPLMN or other lower priority PLMN. The UE might periodically measure signal quality or signal strength to determine if another candidate cell is suitable for the UE to camp or to determine whether to select a different PLMN.

Referring to Figure 2, a UE 120 might be in the coverage areas of several base stations (such as gNB 210, eNB 212, gNB 222, gNB 224, eNB 232). Each base station operates one or more cells. In Figure 2, the gNB 210 and the eNB 212 are using different RATs (5G NR and LTE, respectively) and are part of the first PLMN 215. The gNB 222, the gNB 224, the eNB 232 are part of a second PLMN 225. The UE receives broadcast signals 252, 254, 222, 224, and 232 from the cells of each base station eNB 212, gNB 210, gNB 222, gNB 224, eNB 232, respectively. The broadcast signals 252, 254, 222, 224, and 232 might include information (such as a SIB message) indicating the PLMN ID, configuration data, and cell-provided cell selection criteria. The broadcast signals 252, 254, 222, 224, and 232 also might include a reference signal to enable measurement of a signal metric. The UE can receive the broadcast signals to obtain the information and measure signal metrics for each available cell. In a conventional PLMN selection mechanism, after collecting the PLMN IDs from the available cells, the UE 120 might select a first PLMN 215 if the first PLMN 215 has a higher priority over a second PLMN 225. For example, the first PLMN 215 might be a HPLMN while the second PLMN 225 might be a VPLMN. Furthermore, the UE may select a RAT during the PLMN selection. For example, 5G NR may have a higher priority over LTE. A PLMN selector list may include entries where each entry has a combination of PLMN and RAT and the priority order for that entry. After selecting the first PLMN 215 and first RAT (5G NR in this example), the UE 120 might select the gNB 210 as the serving cell for the UE based on a comparison of the signal metrics 254 for gNB 210 with a cell signal-level threshold of the cell-provided cell selection criteria.

Because the conventional PLMN selection relies on PLMN priority as a first criteria, the UE 120 might select or remain camped on a serving cell (such as gNB 210) that belongs to a higher priority PLMN (such as the first PLMN 215) and RAT, even when the signal metrics of the gNB 210 is lower than signal metrics 253, 254, and 255 of base stations gNB 222, gNB 224, and eNB 232 that are part of the second PLMN 225. In other words, the UE 120 might select gNB 210 as the serving cell because it is in a higher priority PLMN and RAT compared to the second PLMN 225 even though a different base station (such as eNB 232) might have higher signal quality or signal strength.

As described in this disclosure, a signal-level network selection mechanism can mitigate the shortcomings of a conventional PLMN selection that would otherwise be based on PLMN prioritization. SENSE is an example signal-level network selection mechanism promulgated by 3GPP. SENSE uses access-technology-specific criteria in addition to or in lieu of the cell-provided cell selection criteria. Access-technology-specific criteria can include a custom access-technology-specific signal-level threshold for each of a set of access technologies. A UE might store the access-technology-specific criteria in a SIM, such as a universal SIM (USIM). The UE is expected to use the access-technology-specific criteria when performing a network selection. Referring again to Figure 2, the UE 120 might select a PLMN and a serving cell from among a plurality of candidate cells (such as gNB 210, eNB 212, gNB 222, gNB 224, eNB 232) by comparing the comparing the signal metrics (such as signal metrics 270, 252, 253, 254, and 255) for each candidate cell with access-technology-specific signal-level thresholds configured in the access-technology-specific criteria. For example, the UE might compare the signal metrics 252 and 255 for LTE base stations eNB 212 and eNB 232, respectively, with a first access-technology-specific signal-level threshold that is specific to LTE. The UE might compare the signal metrics 270, 253, and 254 for 5G NR base stations gNB 210, gNB 222, and gNB 224, respectively, with a second access-technology-specific signal-level threshold that is specific to 5G NR.

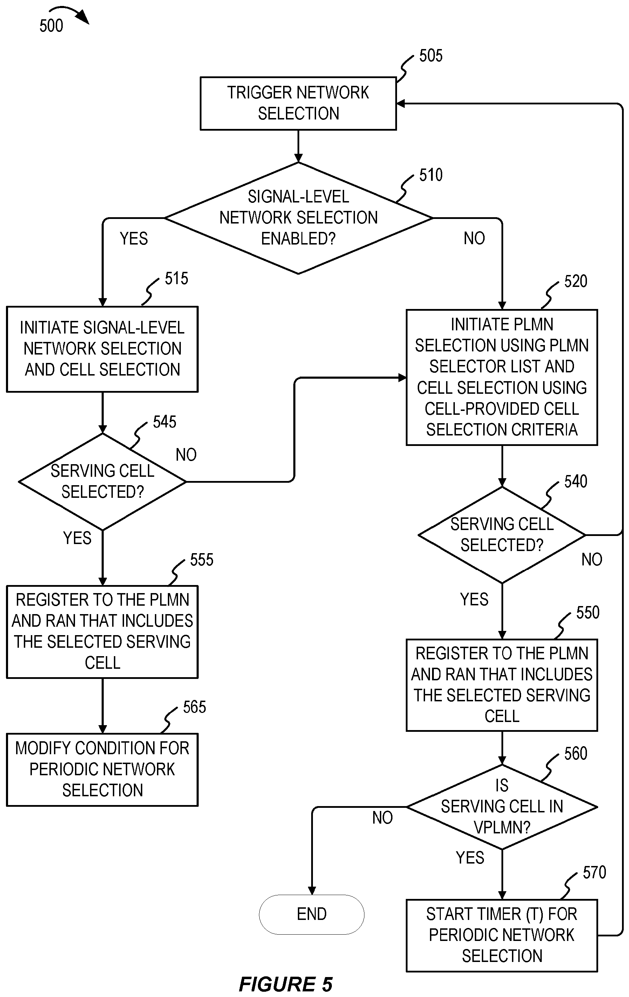

The cell-provided cell selection criteria and access-technology-specific criteria might relate to the same or different signal metrics. For example, a cell signal-level threshold in the cell-provided cell selection criteria and a first technology specific threshold access-technology-specific criteria might both be related to RSRQ. Alternatively, the cell signal-level threshold might be related to RSSI while the first access-technology-specific signal-level threshold might be related to RSRQ. In some cases, absent the techniques of this disclosure, the access-technology-specific criteria and the cell-provided cell selection criteria might conflict with each other or produce unpredictable network selection results. Furthermore, as described with reference to Figures 5, 8, and 9, the conditions for periodic network selection might be different depending on whether a PLMN was previously selected using the cell-provided cell selection criteria or the access-technology-specific criteria.

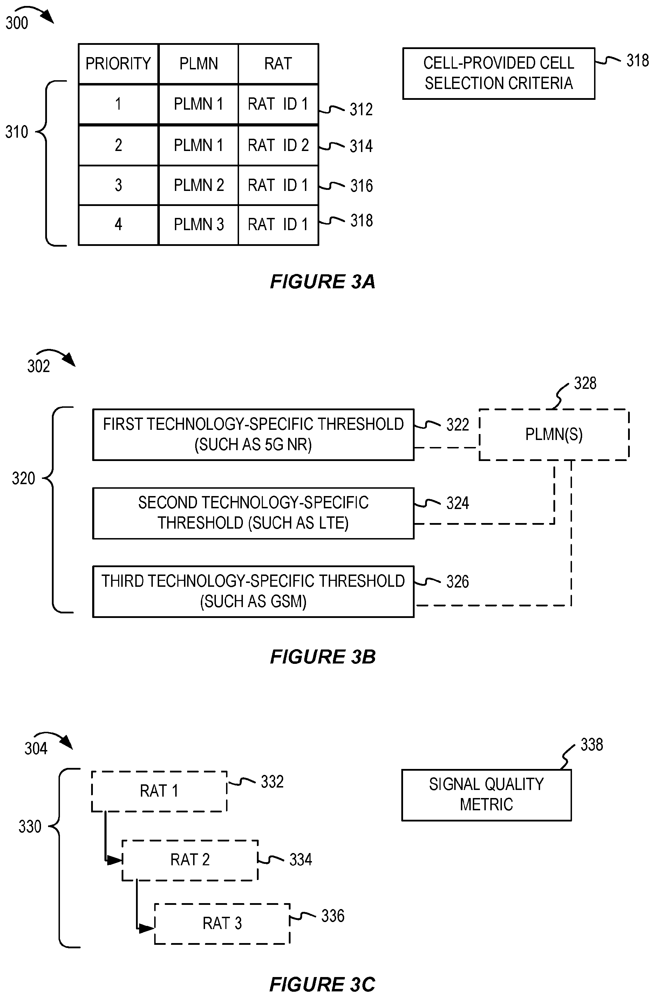

**Figure 3A** shows a block diagram 300 conceptually illustrating an example PLMN selector list 310 and cell-provided cell selection criteria 318 for a conventional PLMN selection mechanism. The PLMN selector list 310 includes entries for combination of PLMN and RAT. For example, a first entry 312 has the highest priority for a first PLMN (PLMN 1) and first RAT (RAT ID 1). A second entry 314 has the next highest priority for a the first PLMN (PLMN 1) and a second RAT (RAT ID 2). A third entry 316 has has a lower priority for a second PLMN (and RAT ID 1) compared to the first PLMN prioritized by the first entry 312 and second entry 314. A fourth entry 318 indicates lower priority for a third PLMN (PLMN 3) compared to the first PLMN and the second PLMN. In a PLMN selector list, an HPLMN/EHPLMN might be prioritized over a User Controlled PLMN (UPLMN), which might be prioritized over an Operator Controlled PLMN (OPLMN), which might be prioritized over other PLMN types.

In a standardized automatic network selection, the UE would search for a PLMN in the following order:
- HPLMN/EHPLMN;
- User Controlled PLMN (UPLMN);
- Operator Controlled PLMN (OPLMN);
- Other PLMN/access technology combinations with received high quality signal in random order:
   - Other PLMN/access technology combinations in order of decreasing signal quality; and
   - PLMNs supporting disaster roaming.

For some of the PLMN types, such as HPLMN, UPLMN and OPLMN, the network can provide the priority of PLMN/access technology combination. Below are further examples of PLMN selector list (Tables 1-3).

For UPLMN, the network may config EF_{PLMNwAcT} (User controlled PLMN selector with Access Technology) in the USIM:

**Table 1.**

| | | | | | | |
|---|---|---|---|---|---|---|
| Identifier: '6F60' | | | Structure: transparent | | | Optional |
| SFI: '0A' | | | | | | |
| File size: 5n bytes (where n ε8) | | | | Update activity: low | | |
| Access Conditions: | | | | | | |
| | READ | | PIN | | | |
| | UPDATE | | PIN | | | |
| | DEACTIVATE | | ADM | | | |
| | ACTIVATE | | ADM | | | |

| Bytes | | Description | | | M/O | Length |
|---|---|---|---|---|---|---|
| 1 to 3 | | 1^{st} PLMN (highest priority) | | | M | 3 bytes |
| 4 to 5 | | 1^{st} PLMN Access Technology Identifier | | | M | 2 bytes |
| 6 to 8 | | 2^{nd} PLMN | | | M | 3 bytes |
| 9 to 10 | | 2^{nd} PLMN Access Technology Identifier | | | M | 2 bytes |
| : | | : | | | | |
| 36 to 38 | | 8^{th} PLMN | | | M | 3 bytes |
| 39 to 40 | | 8^{th} PLMN Access Technology Identifier | | | M | 2 bytes |
| 41 to 43 | | 9^{th} PLMN | | | O | 3 bytes |
| 44 to 45 | | 9^{th} PLMN Access Technology Identifier | | | O | 2 bytes |
| : | | : | | | | |
| (5n-4) to (5n-2) | | N^{th} PLMN (lowest priority) | | | O | 3 bytes |
| (5n-1) to 5n | | N^{th} PLMN Access Technology Identifier | | | O | 2 bytes |

For OPLMN, the network may config EF_{OPLMNwACT} (Operator controlled PLMN selector with Access Technology) in the USIM:

**Table 2.**

| | | | | | | |
|---|---|---|---|---|---|---|
| Identifier: '6F61' | | | Structure: transparent | | | Optional |
| SFI: '11' | | | | | | |
| File size: 5n bytes , (n ≥ 8) | | | | Update activity: low | | |
| Access Conditions: | | | | | | |
| | READ | | PIN | | | |
| | UPDATE | | ADM | | | |
| | DEACTIVATE | | ADM | | | |
| | ACTIVATE | | ADM | | | |

| Bytes | | Description | | | M/O | Length |
|---|---|---|---|---|---|---|
| 1 to 3 | | 1^{st} PLMN (highest priority) | | | M | 3 bytes |
| 4 to 5 | | 1^{st} PLMN Access Technology Identifier | | | M | 2 bytes |
| : | | : | | | | |
| 36 to 38 | | 8^{th} PLMN | | | M | 3 bytes |
| 39 to 40 | | 8^{th} PLMN Access Technology Identifier | | | M | 2 bytes |
| 41 to 43 | | 9^{th} PLMN | | | O | 3 bytes |
| 44 to 45 | | 9^{th} PLMN Access Technology Identifier | | | O | 2 bytes |
| : | | : | | | | |
| (5n-4) to (5n-2) | | N^{th} PLMN (lowest priority) | | | O | 3 bytes |
| (5n-1) to 5n | | N^{th} PLMN Access Technology Identifier | | | O | 2 bytes |

For HPLMN, the network may configure EF_{HPLMNwAcT} (HPLMN selector with Access Technology) in the USIM:

**Table 3.**

| | | | | | | |
|---|---|---|---|---|---|---|
| Identifier: '6F62' | | | Structure: Transparent | | | Optional |
| SFI: '13' | | | | | | |
| File size: 5n (n ≥ 1) bytes | | | | Update activity: low | | |
| Access Conditions: | | | | | | |
| | READ | | PIN | | | |
| | UPDATE | | ADM | | | |
| | DEACTIVATE | | ADM | | | |
| | ACTIVATE | | ADM | | | |

| Bytes | | Description | | | M/O | Length |
|---|---|---|---|---|---|---|
| 1 to 3 | | 1^{st} PLMN | | | M | 3 bytes |
| 4 to 5 | | 1^{st} PLMN Access Technology Identifier | | | M | 2 bytes |
| 6 to 8 | | 2^{nd} PLMN | | | O | 3 bytes |
| 9 to 10 | | 2^{nd} PLMN Access Technology Identifier | | | O | 2 bytes |
| : | | : | | | | |
| (5n-4) to (5n-2) | | n^{th} PLMN | | | O | 3 bytes |
| (5n-1) to 5n | n^{th} PLMN Access Technology Identifier | | O | | 2 bytes | |

The coding of the access available technologies is illustrated in the following tables:

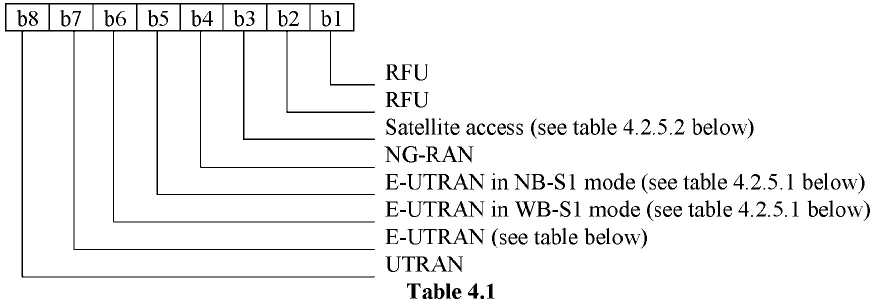

**Table 4.2.5.1. Coding of the E-UTRAN**

| b7 | b6 | b5 | Description |
|---|---|---|---|
| 0 | x | x | E-UTRAN not selected |
| 1 | 0 | 0 | E-UTRAN in WB-S1 mode and NB-S1 mode |
| 1 | 0 | 1 | E-UTRAN in NB-S1 mode only |
| 1 | 1 | 0 | E-UTRAN in WB-S1 mode only |
| 1 | 1 | 1 | E-UTRAN in WB-S1 mode and NB-S1 mode |

**Table 4.2.5.2. Example coding of the Satellite access**

| b7 | b4 | b3 | Description |
|---|---|---|---|
| 1 | 0 | 0 | E-UTRAN |
| 1 | 0 | 1 | Satellite E-UTRAN |
| 0 | 1 | 0 | NG-RAN |
| 0 | 1 | 1 | Satellite NG-RAN |

The UE selects a highest priority PLMN available in an area based on prioritization in using the PLMN selector list 310. Then, the UE selects a serving cell. During cell selection, the UE would also take the cell-provided cell selection criteria 318 into consideration. The cell-provided cell selection criteria 318 include one or more cell signal-level thresholds. Examples of the cell signal-level thresholds might include RSRQ, RSRP, or both. For 5G NR, as an example, the cell signal-level thresholds might be Qᵣₓₗₑᵥₘᵢₙ/Q_{qualmin} thresholds indicating minimum RSRP/RSRQ values. The cell-provided cell selection criteria 318 also might include Q_{rxievminoffset}/Q_{qualminoffset} offset parameters for higher priority PLMN cell selection. When the UE initiates a periodic search (also referred to as periodic network selection attempt) for a higher priority PLMN while camped normally in a VPLMN, the UE would use Qᵣₓₗₑᵥₘᵢₙ + Q_{rxlevminoffset} / Q_{qualmin} + Q_{qualminoffset} as the minimum RSRP/RSRQ values.

**Figure 3B** shows a block diagram 302 conceptually illustrating example access-technology-specific criteria for a SENSE mechanism. The access-technology-specific criteria might include one or more access-technology-specific signal-level thresholds 320. For example, access-technology-specific signal-level thresholds 320 might include a first access-technology-specific signal-level threshold 322 for 5G NR, a second access-technology-specific signal-level threshold 324 for LTE, and a third access-technology-specific 326 for GSM. In some cases, the access-technology-specific criteria may be associated with particular PLMNs 328. Alternatively, the access-technology-specific criteria might include a list of acceptable PLMNs 328 which may not be prioritized or the PLMNs 328 might have the same priority. In some cases, the access-technology-specific criteria may indicate an access-technology-specific signal-level threshold that is for a unique combination of RAT and PLMN (or PLMN type).

**Figure 3C** shows a block diagram 304 conceptually illustrating example signal-quality criteria for a signal-quality centric network selection mechanism. In some implementations of the signal-quality centric network selection mechanism, the signal quality metric 338 might be the only criterion for selecting a serving cell from among available or acceptable PLMNs. UE might select whichever candidate cell has the highest signal metric, regardless of access technology or PLMN type.

In some implementations, the signal-quality criteria might include a prioritization 330 of access technologies. For example, a first RAT 332 might have a higher priority than a second RAT 224, which has a higher priority than a third RAT 336. In some cases, the UE might select from any candidate cells within an allowed list of PLMNs (not shown) without prioritizing one type of PLMN over another type of PLMN.

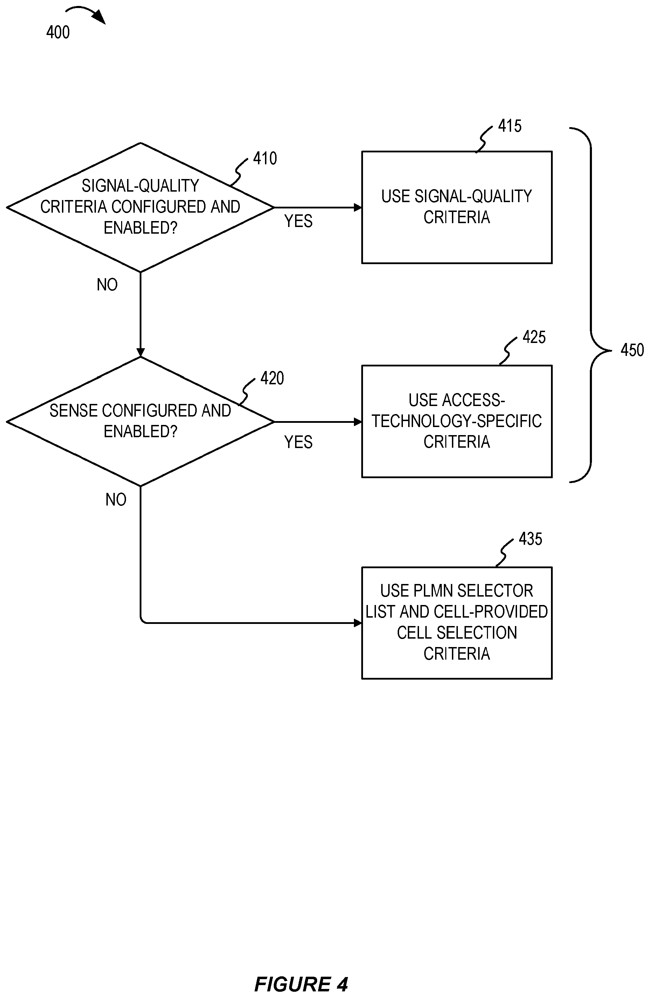

**Figure 4** shows a flowchart of an example process 400 for selecting among a variety of network selection mechanisms performed by a UE, such as UE 120 described with reference to Figures 1 and 2. The example process 400 shows that the signal-quality centric network selection mechanism is prioritized over the SENSE mechanism, which is prioritized over the conventional PLMN selection mechanism. In some implementations, the prioritization of network selection mechanisms may be ordered differently (such as prioritizing SENSE over the signal-quality centric network selection mechanism).

At block 410, the UE might determine whether signal-quality criteria for a signal-quality centric network selection mechanism are configured and enabled. The signal-quality criteria are said to be configured and enabled when the signal-quality criteria are stored in a memory of the UE and an operator has enabled the signal-quality centric network selection mechanism. For example, a setting or configuration in the UE may indicate whether the whether the signal-quality centric network selection mechanism is enabled. In some implementations, the signal-quality centric network selection mechanism might be dynamically enabled or disabled by a processor of the UE. Alternatively, or additionally, the signal-quality centric network selection mechanism might be manually enabled or disabled via a user interface of the UE. If the signal-quality criteria are configured and enabled, the process 400 proceeds to block 415, where the UE uses the signal-quality criteria for selecting a serving cell (and its PLMN) based on highest signal quality. If the signal-quality criteria are not configured or not enabled, the process 400 proceeds to block 420.

At block 420, the UE might determine whether the SENSE mechanism is configured and enabled. The SENSE is said to be configured and enabled when the access-technology-specific criteria are stored in a memory of the UE and an operator has enabled the SENSE mechanism. The SENSE mechanism might be dynamically or manually enabled or disabled as described with reference to the signal-quality centric network selection mechanism in block 410. If the SENSE mechanism is configured and enabled, the process 400 proceeds to block 425, where the UE uses the access-technology-specific criteria (such as access-technology-specific signal-level thresholds) when selecting a PLMN and suitable serving cell. If the SENSE mechanism is not configured or not enabled, the process 400 proceeds to block 435.

At block 435, the UE might default to the conventional PLMN selection mechanism based on a PLMN selector list and cell selection based on cell-provided cell selection criteria.

**Figure 5** shows a flowchart of an example process for coordinating network selection mechanisms performed by a UE, such as UE 120 described with reference to Figures 1 and 2. At block 505, the UE triggers a network selection. The UE might trigger the network selection for a variety of reasons, such as a power-on condition, disablement of an airplane mode, a manual user interaction, or an expiration of a timer for periodic network selection, among other examples.

Beginning with the scenario where the signal-level network selection mechanism is not configured or not enabled ("No" branch from block 510), at block 520, the UE initiates a PLMN selection using a PLMN selector list and cell selection using cell-provided cell selection criteria in a conventional manner. For example, the UE might compare signal metrics for candidate cells in a highest prioritized PLMN with one or more cell signal-level thresholds of the cell-provided cell selection criteria. At block 540, if the UE selects a suitable serving cell in a highest priority PLMN/RAT, the process 500 proceeds to block 550; otherwise, the process 500 may return to block 505 to trigger a subsequent network selection. At block 550, the UE registers with the PLMN that includes the selected serving cell. For example, the UE might establish an RRC relationship with the selected serving cell and perform a NAS registration and/or tracking area update with a core network of the PLMN that includes the selected serving cell. At block 560, if the selected serving cell is in a VPLMN, the UE starts a timer (T) for periodic network selection (block 570); otherwise, if the selected serving cell is in an HPLMN (or EHPLMN), the process 500 ends until an event triggers block 505 again. From block 570, when the timer for periodic network selection expires, the process 500 returns to block 505 (or alternatively, to block 520). The periodic network selection is triggered after expiration of timer (T) so that the UE attempts to obtain service from a higher-priority PLMN (higher than the current VPLMN) using the PLMN selector list and cell-provided cell selection criteria.

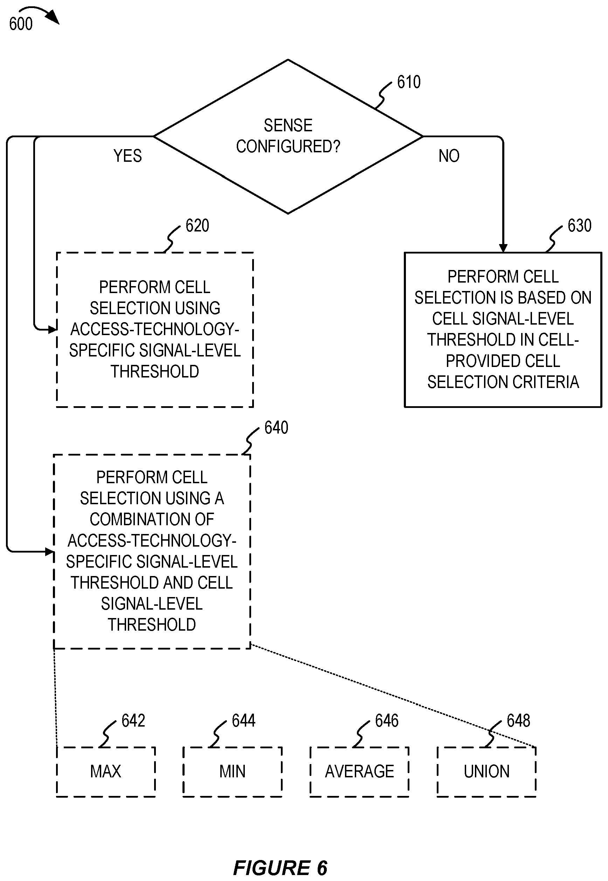

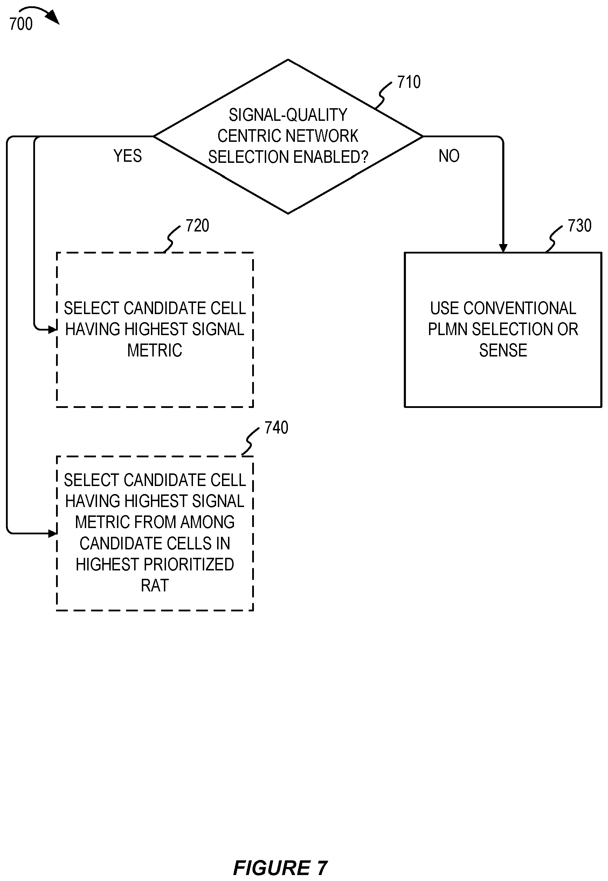

In the scenario where the signal-level network selection mechanism is enabled ("Yes" branch from block 510), the process 500 proceeds to block 515. At block 515, the UE initiates the signal-level network selection mechanism. For example, the UE might compare signal metrics for candidate cells with an appropriate access-technology-specific signal-level threshold that matches the access technology of the candidate cell. The access-technology-specific signal-level thresholds are further described with reference to Figures 6 and 7. At block 545, if the UE does not successfully select a serving cell using the signal-level network selection mechanism, the process 500 proceeds to block 520, where the UE performs PLMN selection and cell selection to select a serving cell. Otherwise, if the UE successfully selects a serving cell using the signal-level network selection mechanism, the process 500 proceeds to block 555. At block 555, the UE registers to the PLMN that includes the selected serving cell. For example, the UE might establish an RRC relationship with the selected serving cell and perform a NAS registration and/or tracking area update with a core network of the PLMN that includes the selected serving cell.

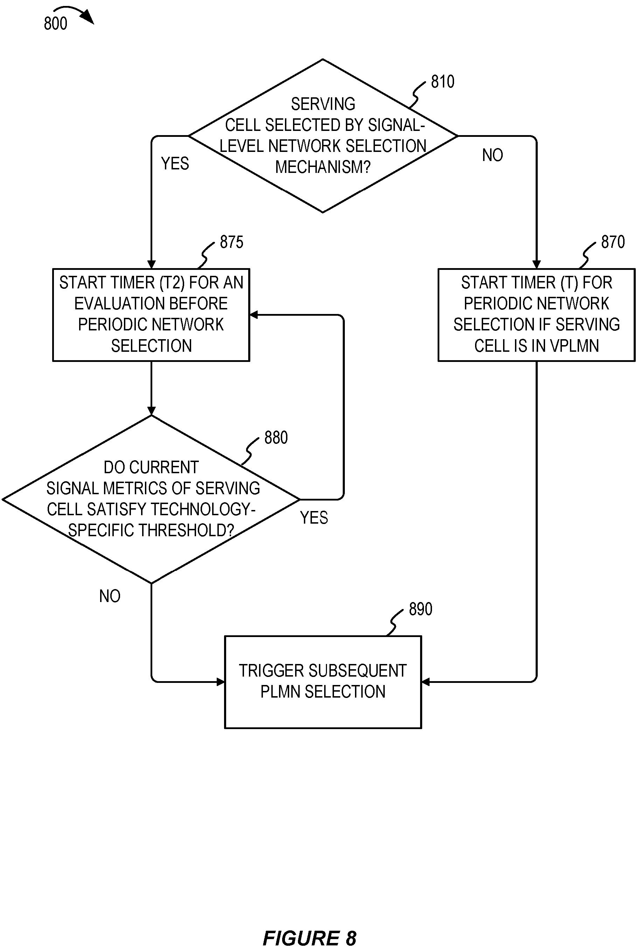

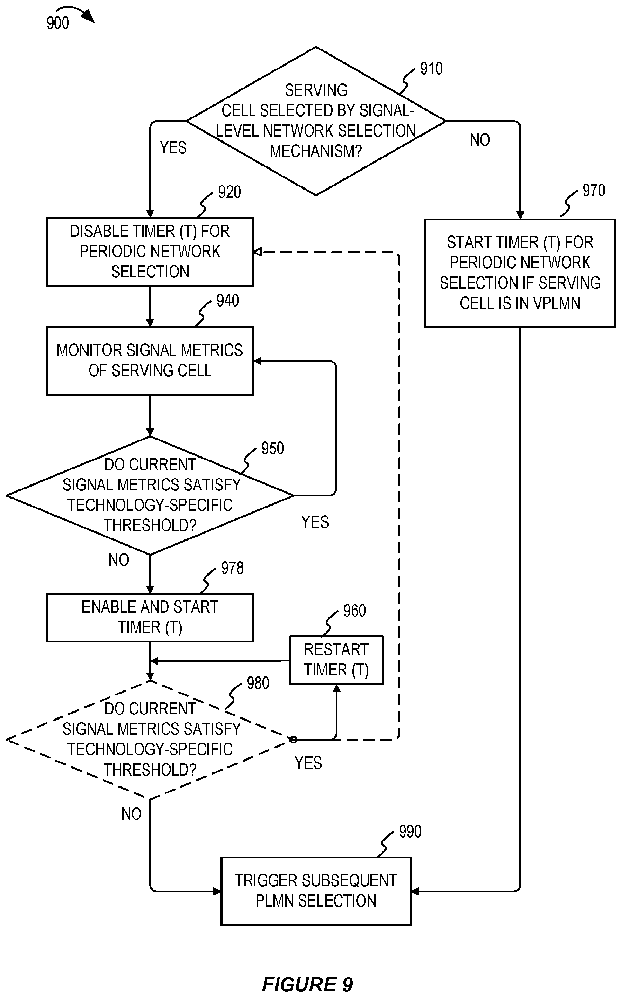

At block 565, the UE modifies a condition for periodic network selection to prevent or mitigate a subsequent PLMN selection that would otherwise occur for a conventional PLMN selection mechanism. The descriptions of Figures 8 and 9 include examples of setting a condition for periodic network selection. The intent of the signal-level network selection mechanism is to find a suitable serving cell (such as with highest signal metric) from among candidate cells in different PLMNs. So, the UE might configure the periodic network selection settings that would otherwise trigger a subsequent PLMN selection. For example, because the UE selected the serving cell using the signal-level network selection mechanism, the UE disables or extends the timer for period network selection even if the selected serving cell is in a lower priority PLMN.

In some implementations, the UE triggers a subsequent PLMN selection (in accordance to a timer for periodic network selection) when the registered PLMN is not a higher priority PLMN and the registered PLMN's access technology signal quality is lower than the access-technology-specific criteria (such as the operator controlled signal threshold per access technology). In some implementations, the UE refrains from triggering the subsequent PLMN selection (in accordance with the timer for periodic network selection) if the registered PLMN is a higher priority PLMN and the registered PLMN's access technology signal quality is equal or higher than the access-technology-specific criteria (such as the operator controlled signal threshold per access technology).

**Figure 6** shows a flowchart of an example process 600 for implementing access-technology-specific signal-level thresholds and cell signal-level thresholds performed by a UE, such as UE 120 described with reference to Figures 1 and 2. At block 610, the UE determines whether SENSE is configured and enabled. For example, the UE determines whether access-technology-specific signal-level thresholds are stored in a memory of the UE. Note that while the example of Figure 6 refers to SENSE, the same concept can be used with signal-quality centric network selection mechanism.

If SENSE is not configured or not enabled ("No" branch of block 610), the process 600 proceeds to block 630. At block 630, the UE uses the a conventional PLMN selection and cell selection. to select a serving cell from among a plurality of candidate cells in a highest priority PLMN. For example, the UE compares signal metrics of the candidate cells in the highest priority PLMN with a cell signal-level threshold in the cell-provided cell selection criteria.

If SENSE is configured and enabled ("Yes" branch of block 610), the UE proceeds with the SENSE mechanism using the access-technology-specific criteria. There are two options (shown as blocks 620 and 640) for using the access-technology-specific signal-level thresholds in the access-technology-specific criteria. In one option, at block 620, the UE might use the access-technology-specific signal-level thresholds and disregard the cell-provided cell selection criteria. For example, the UE compares first signal metrics of a first candidate cell with a first access-technology-specific signal-level threshold for the access technology of the first candidate cell. Similarly, the UE compares second signal metrics of a second candidate cell with a second access-technology-specific signal-level threshold for the access technology of the second candidate cell. In another option, at block 640, the UE might use a combination of the access-technology-specific signal-level thresholds and the cell signal-level threshold. The UE compares signal metrics of each candidate cell with a combination of the access-technology-specific signal-level threshold and the cell signal-level threshold.

Figure 6 shows several example combinations (blocks 642, 644, 646, and 648) of the access-technology-specific signal-level threshold and the cell signal-level threshold. For example, at block 642, the combination might be based on a maximum of multiple thresholds (such as the access-technology-specific signal-level threshold for the SENSE mechanism, a cell signal-level threshold for a normal-priority PLMN, and a cell signal-level threshold for a high-priority PLMN, or any combination thereof). At block 644, the combination might be based on a minimum of multiple thresholds (such as the access-technology-specific signal-level threshold for the SENSE mechanism, a cell signal-level threshold for a normal-priority PLMN, and a cell signal-level threshold for a high-priority PLMN, or any combination thereof). At block 646, the combination might be based on an average of multiple thresholds (such as the access-technology-specific signal-level threshold for the SENSE mechanism, a cell signal-level threshold for a normal-priority PLMN, and a cell signal-level threshold for a high-priority PLMN, or any combination thereof). In another example (not shown), the UE might use one of the thresholds (such as the access-technology-specific signal-level threshold for the SENSE mechanism, a cell signal-level threshold for a normal-priority PLMN, and a cell signal-level threshold for a high-priority PLMN) based on the pre-defined priority. For example, if the priority order is (1) access-technology-specific signal-level threshold, (2) a cell signal-level threshold for a normal-priority PLMN, (3) a cell signal-level threshold for a high-priority PLMN, then the UE might use the access-technology-specific signal-level threshold, if available for the access, regardless of the value of the other thresholds.

Another example combination, shown at block 648, might be based on a union of multiple thresholds. For example, the access-technology-specific signal-level threshold may be based on a first type of signal metric (such as RSRQ) and the cell signal-level threshold may be based on a different type of signal metric (such as RSRP). When the union combination, the UE might select a serving cell that satisfies both the access-technology-specific signal-level threshold and the cell signal-level threshold for their respective signal metric types.

**Figure 7** shows a flowchart of an example process 700 for implementing a signal-quality centric network selection mechanism performed by a UE, such as UE 120 described with reference to Figures 1 and 2. At block 710, the UE determines whether the signal-quality centric network selection mechanism is configured and enabled.

If the signal-quality centric network selection mechanism is not configured or not enabled ("No" branch of block 710), the process 700 proceeds to block 730. At block 730, the UE performs a PLMN selection using the conventional PLMN selection or using the SENSE mechanism (if SENSE is configured and enabled).

If the signal-quality centric network selection mechanism is configured and enabled ("Yes" branch of block 710), the UE proceeds with the signal-quality centric network selection mechanism. There are two options (shown as blocks 720 and 740) for using the signal-quality centric network selection mechanism. In one option, at block 720, the UE might select a first candidate cell as the serving cell when the first candidate cell has the highest signal metrics among a plurality of candidate cells. For example, the UE might disregard access technology and PLMN considerations (such as the PLMN selector list) when selecting the serving cell and its PLMN. In another option, at block 740, the UE might select a first candidate cell as the serving cell when the first candidate cell has the highest signal metrics among a plurality of candidate cells that use a highest prioritized RAT. For example, the UE might store a RAT priority and first consider candidate cells from a higher prioritized RAT before considering candidate cells in lower prioritized RATs.

**Figure 8** shows a flowchart of an example process 800 for managing a condition for periodic network selection performed by a UE, such as UE 120 described with reference to Figures 1 and 2. The example process 800 is an example of the setting the condition for periodic network selection (block 565 of Figure 5). A periodic network selection (also referred to as PLMN reselection) includes a possibility that a subsequent PLMN selection results in the UE selecting a new PLMN for registration.

At block 810, the UE determines whether the UE selected the serving cell using a signal-level network selection mechanism (such as SENSE or signal-quality centric network selection). If so, the process 800 proceeds to block 875; otherwise, the process 800 proceeds to block 870. At block 870 (when the serving cell was selected using a conventional PLMN selection and cell selection), the UE starts a timer (T) for periodic network selection if the serving cell is in a VPLMN (or any PLMN type having a lower priority than HPLMN). At the expiration of the timer T, the UE triggers a subsequent PLMN selection (block 890). When the UE triggers the subsequent PLMN selection, the UE might begin at block 505 of Figure 5. Alternatively, or additionally, the subsequent PLMN selection might follow the processes 400, 500, 600, or 700, described with reference to Figures 4, 5, 6, and 7, respectively.

From block 810, if the UE selected the serving cell using a signal-level network selection mechanism, the process 800 proceeds to block 875. At block 875, the UE starts a timer (T2) for evaluation of the current serving cell before a periodic network selection that would normally occur for the conventional PLMN selection mechanism. In some implementations, the timer (T2) uses same timer value (such as the value of timer (T)) that would normally be used for periodic network selection. Alternatively, the timer (T2) is an independent timer used to trigger the evaluation. When the timer (T2) expires, the UE determines 880 whether the signal metrics of the serving cell satisfy (being equal or higher than) the access-technology-specific signal-level threshold. Block 880 also may be referred to as an evaluation of the current serving cell. For example, if the signal metrics still satisfy the access-technology-specific signal-level threshold, the UE deems the serving cell suitable for service. If the serving cell remains suitable for service, the UE refrains from triggering the periodic network selection and instead returns to block 875, where the UE restarts the timer (T2). Alternatively, if the signal metrics of the serving cell do not satisfy (being less than) the access-technology-specific signal-level threshold, the process 800 proceeds to block 890, where the UE triggers the subsequent PLMN selection. Although block 880 shows the evaluation of the current serving cell based on signal metrics, the UE might alternatively or additionally use a different evaluation of the current serving cell. For example, at block 880, the UE might consider a priority of the RPLMN of the current serving cell when deciding whether the current serving cell remains suitable for service. If the RPLMN is a high priority PLMN, the UE might deem the serving cell suitable for service. If the serving cell remains suitable for service, the UE refrains from triggering the periodic network selection and instead returns to block 875. Otherwise, if the RPLMN is a low priority PLMN, the process 800 proceeds to block 890, where the UE triggers the subsequent PLMN selection (such as by beginning at block 505 of Figure 5). In some implementations, the UE might evaluate the suitability of the current serving cell based on both the signal metrics compared to the access-technology-specific signal-level threshold as well as the priority of the RPLMN of the serving cell.

**Figure 9** shows a flowchart of another example process for managing a condition for periodic network selection performed by a UE, such as UE 120 described with reference to Figures 1 and 2. The example process 900 is an example of the setting the condition for periodic network selection (block 565 of Figure 5).

At block 910, the UE determines whether the UE selected the serving cell using a signal-level network selection mechanism (such as SENSE or signal-quality centric network selection). If so, the process 900 proceeds to block 920; otherwise, the process 900 proceeds to block 970. At block 970 (when the serving cell was selected using the conventional PLMN selection mechanism), the UE starts a timer (T) for periodic network selection if the serving cell is in a VPLMN (or any PLMN type having a lower priority than HPLMN). At the expiration of the timer T, the UE triggers a subsequent PLMN selection (block 990).

From block 910, if the UE selected the serving cell using a signal-level network selection mechanism, the process 900 proceeds to block 920. At block 920, the UE disables the timer (T) that would otherwise be used to trigger a subsequent PLMN selection for the conventional PLMN selection mechanism. At block 940, the UE monitors signal metrics of the serving cell. At block 950, the UE evaluates whether the current serving cell remains suitable for service in a manner similar to block 880 described with reference to Figure 8.

At block 978, the UE enables and starts the timer (T) for periodic network selection similar to block 875. When the timer (T) expires, the UE triggers the subsequent PLMN selection (block 990). In some implementations, the UE might perform an evaluation (shown at block 980) of the current serving cell before triggering the subsequent PLMN selection similar to block 880. For example, at block 980, the UE determines whether the current signal metrics of the serving cell satisfy the access-technology-specific signal-level threshold. If the signal metrics satisfy the access-technology-specific signal-level threshold ("Yes" branch of block 980), the UE restarts the timer (T) (block 960) without triggering the subsequent PLMN selection. Alternatively, the UE might disable the timer (T) (block 920). Thus, the UE prevents the periodic network selection from being triggered if the current signal metrics improve after the timer (T) is enabled in block 978. However, at block 980, if the current signal metrics still do not satisfy the access-technology-specific signal-level threshold ("No" branch of block 980), the process 900 proceeds to block 990, where the UE triggers the subsequent PLMN selection. When the UE triggers the subsequent PLMN selection, the UE might begin at block 505 of Figure 5. Alternatively, or additionally, the UE might follow the processes 400, 500, 600, or 700, described with reference to Figures 4, 5, 6, and 7, respectively.

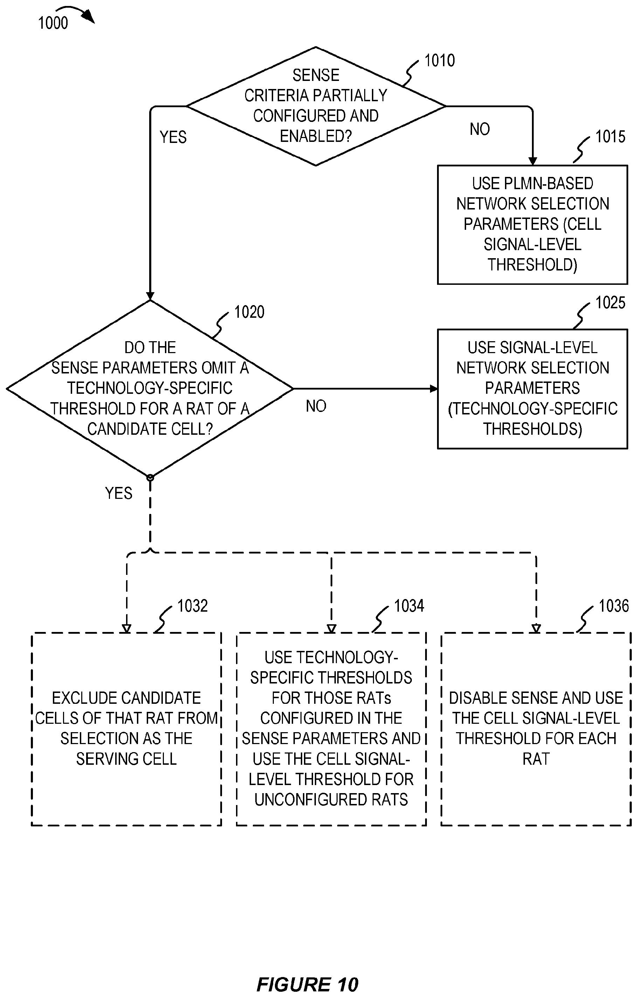

**Figure 10** shows a flowchart of an example process in which access-technology-specific criteria might not include an access-technology-specific signal-level threshold for a RAT of a candidate cell. In some implementations, one or more process blocks of Figure 10 might be performed by a UE, such as UE 120 described with reference to Figures 1 and 2. The process 1000 is described with reference to access-technology-specific criteria, but also can be used with signal-quality criteria for a signal-quality centric network selection mechanism. Process 1000 can be used when the access-technology-specific criteria (for SENSE) include access-technology-specific signal-level thresholds for some RATs but not all RATs that are in use in a particular area. For example, the access-technology-specific criteria may include an access-technology-specific signal-level threshold for LTE but might not include an access-technology-specific signal-level threshold for GSM or another access technology.

At bock 1010, the UE determines if access-technology-specific criteria (also referred to as SENSE criteria) are configured and enabled. In this case, the access-technology-specific criteria are configured if they include at least one access-technology-specific signal-level threshold for an access technology, even though there might be candidate cells using a different access technology in the vicinity of the UE. If the access-technology-specific criteria are at least partially configured and enabled, the process 1000 proceeds to block 1020; otherwise, the process 1000 proceeds to block 1015. At block 1015, the UE uses the PLMN selector list and cell-provided cell selection criteria (with a cell signal-level threshold) for PLMN selection and cell selection.

At block 1020, the UE determines whether the access-technology-specific criteria omits an access-technology-specific signal-level threshold for a RAT of a candidate cell. For example, the access-technology-specific criteria might include the first access-technology-specific for a first RAT but might not include a second access-technology-specific for a second RAT. Alternatively, the access-technology-specific criteria may have an access-technology-specific with an invalid or predetermined disablement value (such as null or ∞) to indicate that the second RAT is not preferred or disabled. The UE determines which RATs are available in its area (and, optionally, within a list of permissible PLMNs) and whether the access-technology-specific criteria include an access-technology-specific for each of those available RATs. The access-technology-specific criteria may be said to be partially configured or incomplete if the access-technology-specific criteria do not include an access-technology-specific (or includes an invalid or predetermined disablement value) for one of the available RATs. If the access-technology-specific criteria include a valid access-technology-specific for all available RATs, the process 1000 proceeds to block 1025, where the UE uses the access-technology-specific criteria for a signal-level network selection. If the access-technology-specific criteria are partially configured or incomplete, the UE may perform one of several options (shown in blocks 1032, 1034 and 1036).

In a first option, shown in block 1032, the UE might exclude those candidate cells (from selection as the serving cell) that use a particular RAT for which the access-technology-specific criteria do not have an access-technology-specific signal-level threshold or for which the access-technology-specific signal-level threshold is invalid, missing or has a predetermined disablement value. For example, the UE may proceed with SENSE on the remaining candidate cells (such as using the first RAT) while excluding those candidate cells using a second RAT (that was not configured or was disabled in the access-technology-specific criteria).

In a second option, shown in block 1034, the UE might use the valid first access-technology-specific signal-level threshold for candidate cells using that first RAT (properly configured in the SENSE parameters) and use a cell signal-level threshold from the cell-provided cell selection criteria for candidate cells that use a second RAT (that was not properly configured in the access-technology-specific criteria). For example, the UE might fill the gap in the access-technology-specific criteria using a cell signal-level threshold from the cell-provided cell selection criteria.

In a third option, shown in block 1036, the UE might disable SENSE and instead use the conventional PLMN selection mechanism and cell selection to select a serving cell. For example, the UE might assume that the access-technology-specific criteria are malformed and disable the SENSE mechanism. To enable network selection to proceed, the UE might fall back to the conventional PLMN selection using the PLMN selector list and cell selection using the cell-provided cell selection criteria.

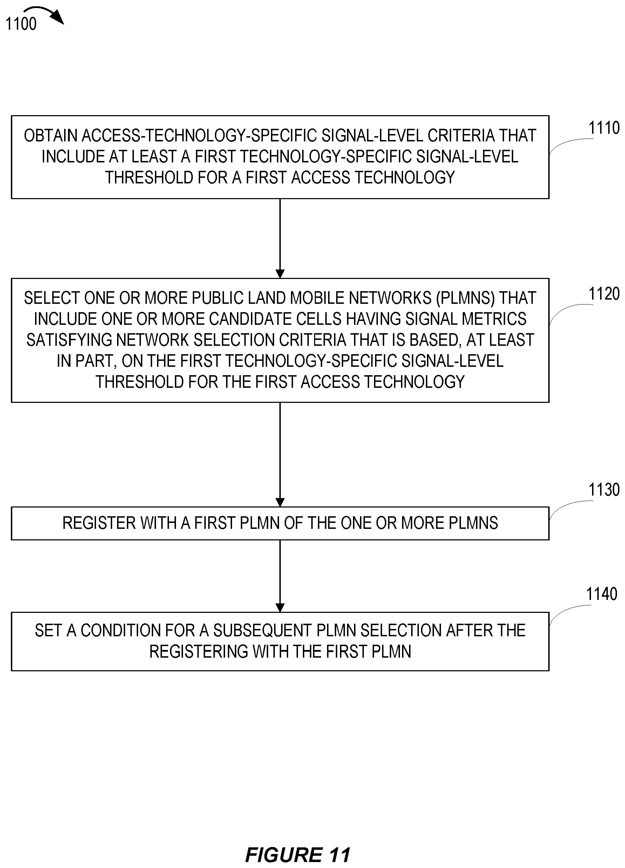

**Figure 11** shows a flowchart of an example process 1100 for signal-level network selection. In some implementations, one or more process blocks of Figure 11 might be performed by a UE, such as UE 120 described with reference to Figures 1 and 2. In block 1110, the UE obtains access-technology-specific criteria that include at least a first access-technology-specific signal-level threshold for a first access technology. In block 1120, the UE selects one or more public land mobile networks (PLMNs) that include one or more candidate cells having signal metrics satisfying network selection criteria that is based, at least in part, on the first access-technology-specific signal-level threshold for the first access technology. In block 1130, the UE registers with a first PLMN of the one or more PLMNs. In block 1140, the UE sets a condition for a subsequent PLMN selection after the registering with the first PLMN.

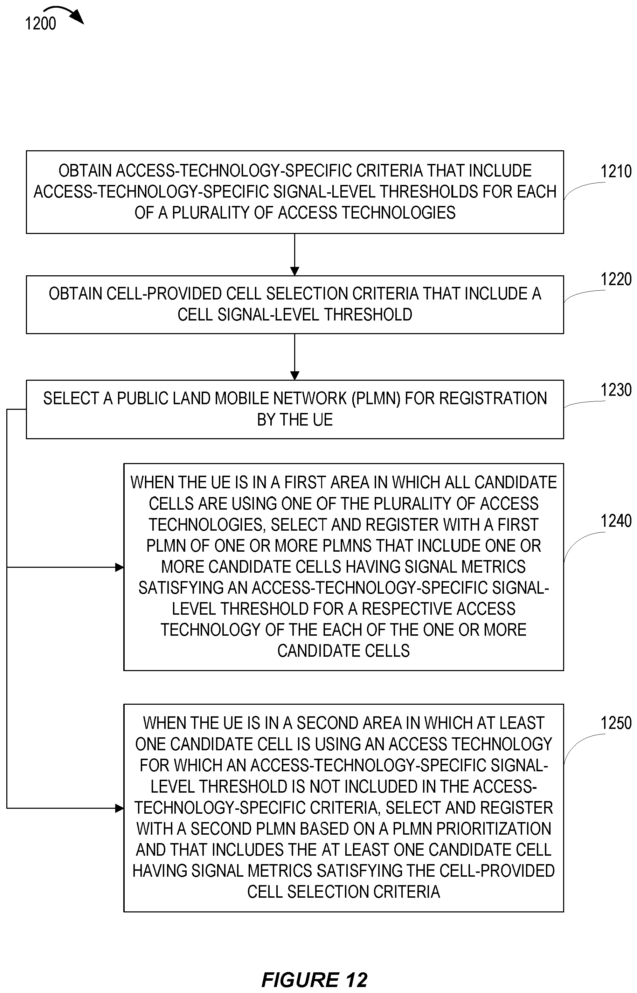

**Figure 12** shows a flowchart of an example process 1200 in which a UE might perform either a signal-level network selection or a conventional PLMN selection. In some implementations, one or more process blocks of Figure 11 might be performed by a UE, such as UE 120 described with reference to Figures 1 and 2. In block 1210, the UE obtains access-technology-specific criteria that include access-technology-specific signal-level thresholds for each of a plurality of access technologies. In block 1220, the UE obtains cell-provided cell selection criteria that include a cell signal-level threshold. In block 1230, the UE selects a public land mobile network (PLMN) for registration by the UE, where the selecting the PLMN might include blocks 1240 or 1250. In block 1240, when the UE is in a first area in which all candidate cells are using one of the plurality of access technologies, the UE selects and registers with a first PLMN of one or more PLMNs that include one or more candidate cells having signal metrics satisfying an access-technology-specific signal-level threshold for a respective access technology of the each of the one or more candidate cells. In block 1250, when the UE is in a second area in which at least one candidate cell is using an access technology for which a access-technology-specific signal-level threshold is not included in the access-technology-specific criteria, the UE selects and registers with a second PLMN based on a PLMN prioritization and that includes the at least one candidate cell having signal metrics satisfying the cell-provided cell selection criteria.

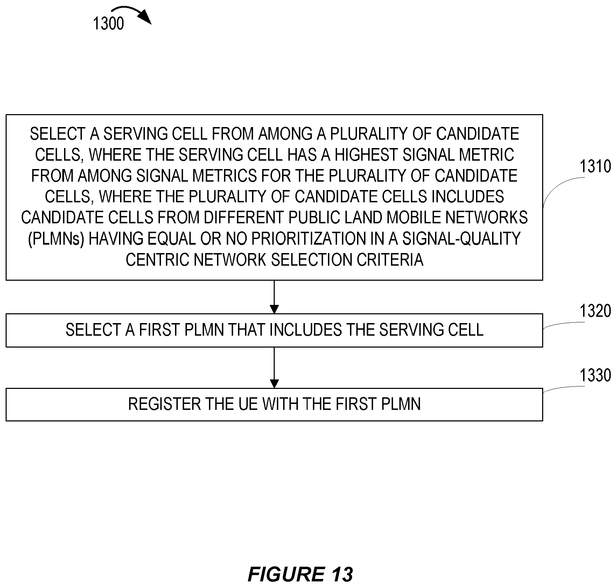

**Figure 13** is a flowchart of an example process 1300 for a signal-quality centric network selection. In some implementations, one or more process blocks of Figure 11 might be performed by a UE, such as UE 120 described with reference to Figures 1 and 2. In block 1310, the UE selects a serving cell from among a plurality of candidate cells, where the serving cell has a highest signal metric from among signal metrics for the plurality of candidate cells, where the plurality of candidate cells includes cells from different public land mobile networks (PLMNs) having equal or no prioritization. In block 1320, the UE selects a first PLMN that includes the selected serving cell. In block 1330, the UE registers with the first PLMN.

Although Figures 11-13 shows example blocks of processes 1100, 1200, and 300, in some implementations, the processes 1100, 1200, and 1300 might include additional blocks, fewer blocks, different blocks, or differently arranged blocks than those depicted in Figures 11-13. Additionally, or alternatively, two or more of the blocks of processes 1100, 1200, or 1300 might be performed in parallel.

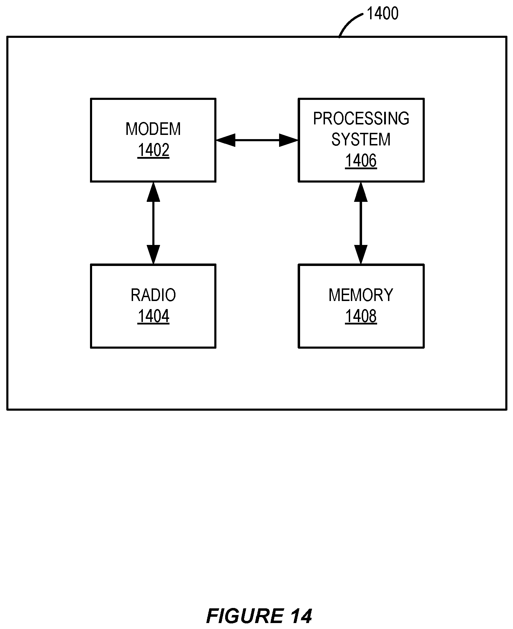

**Figure 14** shows a block diagram of an example wireless communication device 1400 that supports cell reselection based on service relationship. In some implementations, the wireless communication device 1400 can be an example of a device for use in a UE, such as the UE 120 described above with reference to Figures 1 and 2. The wireless communication device 1400 is capable of transmitting (or outputting for transmission) and receiving wireless communications.

The wireless communication device 1400 can be, or can include, a chip, system on chip (SoC), chipset, package or device. The term "system-on-chip" (SoC) is used herein to refer to a set of interconnected electronic circuits typically, but not exclusively, including one or more processors, a memory, and a communication interface. The SoC might include a variety of different types of processors and processor cores, such as a general purpose processor, a central processing unit (CPU), a digital signal processor (DSP), a graphics processing unit (GPU), an accelerated processing unit (APU), a sub-system processor, an auxiliary processor, a single-core processor, and a multicore processor. The SoC might further include other hardware and hardware combinations, such as a field programmable gate array (FPGA), a configuration and status register (CSR), an application-specific integrated circuit (ASIC), other programmable logic device, discrete gate logic, transistor logic, registers, performance monitoring hardware, watchdog hardware, counters, and time references. SoCs might be integrated circuits (ICs) configured such that the components of the IC reside on the same substrate, such as a single piece of semiconductor material (such as, for example, silicon).

The term "system in a package" (SIP) is used herein to refer to a single module or package that might contain multiple resources, computational units, cores or processors on two or more IC chips, substrates, or SoCs. For example, a SIP might include a single substrate on which multiple IC chips or semiconductor dies are stacked in a vertical configuration. Similarly, the SIP might include one or more multi-chip modules (MCMs) on which multiple ICs or semiconductor dies are packaged into a unifying substrate. A SIP also might include multiple independent SoCs coupled together via high speed communication circuitry and packaged in close proximity, such as on a single motherboard or in a single mobile communication device. The proximity of the SoCs facilitates high speed communications and the sharing of memory and resources.

The term "multicore processor" is used herein to refer to a single IC chip or chip package that contains two or more independent processing cores (for example a CPU core, IP core, GPU core, among other examples) configured to read and execute program instructions. An SoC might include multiple multicore processors, and each processor in an SoC might be referred to as a core. The term "multiprocessor" may be used herein to refer to a system or device that includes two or more processing units configured to read and execute program instructions.

The wireless communication device 1400 might include one or more modems 1402. In some implementations, the one or more modems 1402 (collectively "the modem 1402") might include a WWAN modem (for example, a 3GPP 4G LTE or 5G compliant modem). In some implementations, the wireless communication device 1400 also includes one or more radios (collectively "the radio 1404"). In some implementations, the wireless communication device 1400 further includes one or more processors, processing blocks or processing elements (collectively "the processing system 1406") and one or more memory blocks or elements (collectively "the memory 1408"). In some implementations, the processing system 1406 can include the memory 1408.

The modem 1402 can include an intelligent hardware block or device such as, for example, an application-specific integrated circuit (ASIC) among other possibilities. The modem 1402 is generally configured to implement a PHY layer. For example, the modem 1402 is configured to modulate packets and to output the modulated packets to the radio 1404 for transmission over the wireless medium. The modem 1402 is similarly configured to obtain modulated packets received by the radio 1404 and to demodulate the packets to provide demodulated packets. In addition to a modulator and a demodulator, the modem 1402 might further include digital signal processing (DSP) circuitry, automatic gain control (AGC), a coder, a decoder, a multiplexer and a demultiplexer. For example, while in a transmission mode, data obtained from the processing system 1406 is provided to a coder, which encodes the data to provide encoded bits. The encoded bits are mapped to points in a modulation constellation (using a selected MCS) to provide modulated symbols. The modulated symbols might be mapped to a number NSS of spatial streams or a number NSTS of space-time streams. The modulated symbols in the respective spatial or space-time streams might be multiplexed, transformed via an inverse fast Fourier transform (IFFT) block, and subsequently provided to the DSP circuitry for Tx windowing and filtering. The digital signals might be provided to a digital-to-analog converter (DAC). The resultant analog signals might be provided to a frequency upconverter, and ultimately, the radio 1404. In implementations involving beamforming, the modulated symbols in the respective spatial streams are precoded via a steering matrix prior to their provision to the IFFT block.

While in a reception mode, digital signals received from the radio 1404 are provided to the DSP circuitry, which is configured to acquire a received signal, for example, by detecting the presence of the signal and estimating the initial timing and frequency offsets. The DSP circuitry is further configured to digitally condition the digital signals, for example, using channel (narrowband) filtering, analog impairment conditioning (such as correcting for I/Q imbalance), and applying digital gain to ultimately obtain a narrowband signal. The output of the DSP circuitry might be fed to the AGC, which is configured to use information extracted from the digital signals, for example, in one or more received training fields, to determine an appropriate gain. The output of the DSP circuitry also is coupled with the demodulator, which is configured to extract modulated symbols from the signal and, for example, compute the logarithm likelihood ratios (LLRs) for each bit position of each subcarrier in each spatial stream. The demodulator is coupled with the decoder, which might be configured to process the LLRs to provide decoded bits. The decoded bits from all of the spatial streams are fed to the demultiplexer for demultiplexing. The demultiplexed bits might be descrambled and provided to the MAC layer (the processing system 1406) for processing, evaluation, or interpretation.

The radio 1404 generally includes at least one radio frequency (RF) transmitter (or "transmitter chain") and at least one RF receiver (or "receiver chain"), which might be combined into one or more transceivers. For example, the RF transmitters and receivers might include various DSP circuitry including at least one power amplifier (PA) and at least one low-noise amplifier (LNA), respectively. The RF transmitters and receivers might, in turn, be coupled to one or more antennas. For example, in some implementations, the wireless communication device 1400 can include, or be coupled with, multiple transmit antennas (each with a corresponding transmit chain) and multiple receive antennas (each with a corresponding receive chain). The symbols output from the modem 1402 are provided to the radio 1404, which transmits the symbols via the coupled antennas. Similarly, symbols received via the antennas are obtained by the radio 1404, which provides the symbols to the modem 1402.

The processing system 1406 can include an intelligent hardware block or device such as, for example, a processing core, a processing block, a central processing unit (CPU), a microprocessor, a microcontroller, a digital signal processor (DSP), an application-specific integrated circuit (ASIC), a programmable logic device (PLD) such as a field programmable gate array (FPGA), discrete gate or transistor logic, discrete hardware components, or any combination thereof designed to perform the functions described herein. The processing system 1406 processes information received through the radio 1404 and the modem 1402, and processes information to be output through the modem 1402 and the radio 1404 for transmission through the wireless medium. In some implementations, the processing system 1406 might generally control the modem 1402 to cause the modem to perform various operations described herein. For example, the processing system 1406, in conjunction with the modem 1402, may implement any of the features described with reference to Figures 4-13.

The memory 1408 can include tangible storage media such as random-access memory (RAM) or read-only memory (ROM), or combinations thereof. The memory 1408 also can store non-transitory processor- or computer-executable software (SW) code containing instructions that, when executed by the processing system 1406, cause the processor to perform various operations described herein for wireless communication, including the generation, transmission, reception and interpretation of MPDUs, frames or packets. For example, various functions of components disclosed herein, or various blocks or steps of a method, operation, process or algorithm disclosed herein, can be implemented as one or more modules of one or more computer programs.

Figures 1-14 and the operations described herein are examples meant to aid in understanding example implementations and should not be used to limit the potential implementations or limit the scope of the claims. Some implementations may perform additional operations, fewer operations, operations in parallel or in a different order, and some operations differently.

The foregoing disclosure provides illustration and description but is not intended to be exhaustive or to limit the aspects to the precise form disclosed. Modifications and variations may be made in light of the above disclosure or may be acquired from practice of the aspects. While the aspects of the disclosure have been described in terms of various examples, any combination of aspects from any of the examples is also within the scope of the disclosure. The examples in this disclosure are provided for pedagogical purposes. Alternatively, or in addition to the other examples described herein, examples include any combination of the following implementation options (enumerated as clauses for clarity).

### CLAUSES

Clause 1. A method for network selection by a user equipment (UE), including: obtaining access-technology-specific criteria that include at least a first access-technology-specific signal-level threshold for a first access technology; selecting one or more public land mobile networks (PLMNs) that include one or more candidate cells having signal metrics satisfying network selection criteria that is based. at least in part, on the first access-technology-specific signal-level threshold for the first access technology; registering with a first PLMN of the one or more PLMNs; and setting a condition for a subsequent PLMN selection after the registering with the first PLMN.

Clause 2. The method of clause 1, further including: selecting a cell from among the one or more candidate cells by comparing first signal metrics of the cell with the first access-technology-specific signal-level threshold; and selecting the first PLMN based on the selecting the cell, where the first PLMN includes the cell and the first signal metrics exceed the first access-technology-specific signal-level threshold.

Clause 3. The method of any one of clauses 1-2, further including: obtaining cell-provided cell selection criteria from the one or more PLMNs, where the cell-provided cell selection criteria include a cell signal-level threshold, and where the network selection criteria is based on a combination of the first access-technology-specific signal-level threshold and the cell signal-level threshold.

Clause 4. The method of clause 3, where the network selection criteria include: a first criterion based on one of a minimum, maximum, or average of the cell signal-level threshold and the first access-technology-specific signal-level threshold, and where the cell signal-level threshold and the first access-technology-specific signal-level threshold are for a same signal metric.

Clause 5. The method of clause 3, where the network selection criteria include at least: a first criterion based on the first access-technology-specific signal-level threshold for a first signal metric; and a second criterion based on the cell signal-level threshold for a second signal metric.

Clause 6. The method of any one of clauses 1-5, where the one or more PLMNs include the first PLMN when a first signal metric of at least a first candidate cell of the first PLMN satisfies the first access-technology-specific signal-level threshold, where the one or more PLMNs include a second PLMN when a second signal metric of at least a second candidate cell of the second PLMN satisfies the first access-technology-specific signal-level threshold, and where the one or more candidate cells include the first candidate cell and the second candidate cell.

Clause 7. The method of any one of clauses 1-5, where the access-technology-specific criteria include a second access-technology-specific signal-level threshold for a second access technology, and where the selecting the one or more PLMNs includes: comparing first signal metrics for a first plurality of candidate cells of the first access technology with the first access-technology-specific signal-level threshold; and comparing second signal metrics for a second plurality of candidate cells of the second access technology with the second access-technology-specific signal-level threshold, where the one or more PLMNs include the first PLMN when the first PLMN includes at least one candidate cell of the first plurality of candidate cells having a first signal metric that satisfies the first access-technology-specific signal-level threshold; and where the one or more PLMNs include a second PLMN when the second PLMN includes at least one candidate cell of the second plurality of candidate cells having a second signal metric that satisfies the second access-technology-specific signal-level threshold.

Clause 8. The method of clause 7, where the access-technology-specific criteria do not include a third access-technology-specific signal-level threshold for a third access technology, the method further including excluding a third plurality of candidate cells of the third access technology from consideration when the selecting the one or more PLMNs.

Clause 9. The method of clause 7, where the access-technology-specific criteria do not include a third access-technology-specific signal-level threshold for a third access technology, the method further including: obtaining cell-provided cell selection criteria from one or more candidate cells of the third access technology, the cell-provided cell selection criteria including a cell signal-level threshold; configuring the third access-technology-specific signal-level threshold based on the cell signal-level threshold; and obtaining third signal metrics for a third plurality of candidate cells of the third access technology, where the one or more PLMNs include a third PLMN when the first signal metrics of a third candidate cell of the third PLMN satisfy the third access-technology-specific signal-level threshold.

Clause 10. The method of clause 7, where the access-technology-specific criteria do not include a third access-technology-specific signal-level threshold for a third access technology, the method further including: obtaining cell-provided cell selection criteria from one or more candidate cells of the third access technology; disregarding the access-technology-specific criteria in the network selection criteria for the third access technology; and configuring the network selection criteria based on a PLMN selector list and the cell-provided cell selection criteria.

Clause 11. The method of any one of clauses 1-10, where the setting the condition includes triggering the subsequent PLMN selection when the first PLMN has a lower priority than a second PLMN and current signal metrics of a serving cell of the first PLMN are lower than the first access-technology-specific signal-level threshold.

Clause 12. The method of any one of clauses 1-11, where the setting the condition includes disabling a timer for the subsequent PLMN selection.

Clause 13. The method of any one of clauses 1-12, where the subsequent PLMN selection is a periodic network selection attempt that normally occurs at an expiration of a timer: where the setting the condition includes refraining from triggering the subsequent PLMN selection at the expiration of the timer when the first PLMN has a higher priority than other ones of the one or more PLMNs and current signal metrics of a serving cell of the first PLMN are equal to or higher than the first access-technology-specific signal-level threshold.

Clause 14. The method of clause 13, further including: upon expiration of the timer, restarting the timer without triggering the periodic network selection attempt when the current signal metrics of the serving cell are equal to or higher than the first access-technology-specific signal-level threshold.

Clause 15. The method of clause 13, where the setting the condition includes: triggering the periodic network selection attempt when the first PLMN has a lower priority than a second PLMN and current signal metrics of a serving cell of the first PLMN are lower than the first access-technology-specific signal-level threshold, where the periodic network selection attempt includes at least one of: if the access-technology-specific criteria remain enabled at the UE, using the access-technology-specific criteria for the subsequent PLMN selection, or if the access-technology-specific criteria are disabled or no longer present at the UE, using cell-provided cell selection criteria for the subsequent PLMN selection.

Clause 16. The method of any one of clauses 1-15, where the setting the condition includes: disabling a timer (T) that would otherwise trigger the subsequent PLMN selection: enabling the timer when first signal metrics of a serving cell of the first PLMN have changed such that the first signal metrics no longer satisfy the first access-technology-specific signal-level threshold; and triggering the subsequent PLMN selection when the first signal metrics of the serving cell do not satisfy the first access-technology-specific signal-level threshold after an expiration of the timer.

Clause 17. The method of any one of clauses 1-16, where the setting the condition includes: disabling or setting the subsequent PLMN selection when the serving cell is in a Home PLMN (HPLMN); and enabling the subsequent PLMN selection when the serving cell is roaming in a Visiting PLMN (VPLMN).

Clause 18. A method for network selection by a user equipment (UE), including: obtaining access-technology-specific criteria that include access-technology-specific signal-level thresholds for each of a plurality of access technologies; obtaining cell-provided cell selection criteria that include a cell signal-level threshold; and selecting a public land mobile network (PLMN) for registration by the UE, where the selecting the PLMN includes: when the UE is in a first area in which all candidate cells are using one of the plurality of access technologies, selecting and registering with a first PLMN of one or more PLMNs that include one or more candidate cells having signal metrics satisfying an access-technology-specific signal-level threshold for a respective access technology of the each of the one or more candidate cells, and when the UE is in a second area in which at least one candidate cell is using an access technology for which a access-technology-specific signal-level threshold is not included in the access-technology-specific criteria, selecting and registering with a second PLMN based on a PLMN prioritization and that includes the at least one candidate cell having signal metrics satisfying the cell-provided cell selection criteria.

Clause 19. The method of clause 18, further including: upon movement of the UE from the first area to the second area or from the second area to the first area, selecting a new PLMN using the access-technology-specific criteria in the first area or the cell-provided cell selection criteria in the second area.

Clause 20. The method of clause 18, further including: setting a condition for a periodic network selection attempt to select a new PLMN based on the selecting and the registering with the first PLMN, where the setting the condition for the periodic network selection attempt includes at least one of: triggering the periodic network selection attempt when the first PLMN has a lower priority than another PLMN and current signal metrics of a serving cell of the first PLMN are lower than the access-technology-specific signal-level threshold for the respective access technology of the serving cell, or refraining from triggering the periodic network selection attempt when the first PLMN has a higher priority than other PLMNs and the current signal metrics of the serving cell of the first PLMN are equal to or higher than the access-technology-specific signal-level threshold.

Clause 21. A method for wireless communication by a user equipment (UE), including: selecting a serving cell from among a plurality of candidate cells, where the serving cell has a highest signal metric from among signal metrics for the plurality of candidate cells, where the plurality of candidate cells includes candidate cells from different public land mobile networks (PLMNs) having equal or no prioritization in a signal-quality criteria; selecting a first PLMN that includes the serving cell; and registering the UE with the first PLMN.

Clause 22. The method of clause 21, further including: setting a condition for a periodic network selection attempt to select a new PLMN after the registering with the first PLMN, where the setting the condition for the periodic network selection attempt includes at least one of: triggering the periodic network selection attempt when current signal metrics of the serving cell are lower than a signal-level threshold of the signal-quality criteria, or refraining from triggering the periodic network selection attempt when the current signal metrics of the serving cell are equal to or higher than the signal-level threshold.

Clause 23. The method of any one of clauses 21-23, where the selecting the serving cell includes: disregarding a PLMN prioritization of a PLMN selector list; and selecting the plurality of candidate cells based on the signal-quality criteria.

Clause 24. The method of any one of clauses 21-23, where the signal-quality criteria include a prioritization of access technologies, and where the plurality of candidate cells include those candidate cells that use the highest priority access technology in the prioritization of access technologies.

Clause 25. A User Equipment (UE), including: a communication unit; and a processing system configured to control the communication unit to implement any one of the methods of clauses 1-24.

Another innovative aspect of the subject matter described in this disclosure can be implemented as a wireless communication device of a UE. The wireless communication device may include at least one interface and a processing system communicatively coupled with the at least one interface. The processing system may be configured to implement any one of the above clauses.

Another innovative aspect of the subject matter described in this disclosure can be implemented as a portable electronic device comprising a wireless communication device, a plurality of antennas coupled to the at least one transceiver to wirelessly transmit signals output from the at least one transceiver and a housing that encompasses the wireless communication device, the at least one transceiver and at least a portion of the plurality of antennas. The wireless communication device may include at least one interface and a processing system communicatively coupled with the at least one interface. The processing system may be configured to implement any one of the above clauses.

Another innovative aspect of the subject matter described in this disclosure can be implemented as a machine-readable medium having processor-readable instructions stored therein that, when executed by a processing system of a UE, cause the UE to implement any one of the above clauses.

Another innovative aspect of the subject matter described in this disclosure can be implemented as an apparatus. The apparatus may include means for implementing any one of the above clauses.

As used herein, the term "component" is intended to be broadly construed as hardware, firmware, or a combination of hardware and software. As used herein, a processor is implemented in hardware, firmware, or a combination of hardware and software. As used herein, the phrase "based on" is intended to be broadly construed to mean "based at least in part on."

Some aspects are described herein in connection with thresholds. As used herein, satisfying a threshold may refer to a value being greater than the threshold, greater than or equal to the threshold, less than the threshold, less than or equal to the threshold, equal to the threshold, not equal to the threshold, or the like.

As used herein, a phrase referring to "at least one of" or "one or more of" a list of items refers to any combination of those items, including single members. For example, "at least one of: a, b, or c" is intended to cover the possibilities of: a only, b only, c only, a combination of a and b, a combination of a and c, a combination of b and c, and a combination of a and b and c.

In this disclosure, the term "can" indicates a capability, or alternatively indicates a possible implementation option. The term "may" indicates a permission, or alternatively indicates a possible implementation option. The term "might" indicates a possible utilization of an implementation option.

The various illustrative components, logic, logical blocks, modules, circuits, operations and algorithm processes described in connection with the implementations disclosed herein may be implemented as electronic hardware, firmware, software, or combinations of hardware, firmware or software. The interchangeability of hardware, firmware and software has been described generally, in terms of functionality, and illustrated in the various illustrative components, blocks, modules, circuits and processes described above. Whether such functionality is implemented in hardware, firmware or software depends upon the particular application and design constraints imposed on the overall system.

As used herein, the terms "SIM," "SIM card," and "subscriber identification module" are used interchangeably to refer to a memory that may be an integrated circuit or embedded into a removable card, and that stores an International Mobile Subscriber Identity (IMSI), related key, or other information used to identify or authenticate a mobile communication device on a network and enable a communication service with the network. Because the information stored in a SIM enables the mobile communication device to establish a communication link for a particular communication service with a particular network, the term "subscription" is used herein as a shorthand reference to refer to the communication service associated with and enabled by the information stored in a particular SIM as the SIM and the communication network, as well as the services and subscriptions supported by that network, correlate to one another. A SIM used in various examples may contain user account information, an international mobile subscriber identity (IMSI), a set of SIM application toolkit (SAT) commands, and storage space for phone book contacts. A SIM card may further store home identifiers (such as, a System Identification Number (SID)/Network Identification Number (NID) pair, a Home Public Land Mobile Number (HPLMN) code, among other examples) to indicate the SIM card network operator provider. An Integrated Circuit Card Identity (ICCID) SIM serial number may be printed on the SIM card for identification. However, a SIM may be implemented within a portion of memory of the mobile communication device, and thus need not be a separate or removable circuit, chip or card.

Additionally, various features that are described in this specification in the context of separate implementations also can be implemented in combination in a single implementation. Conversely, various features that are described in the context of a single implementation also can be implemented in multiple implementations separately or in any suitable subcombination. As such, although features may be described above as acting in particular combinations, and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Further, the drawings may schematically depict one or more example processes in the form of a flowchart or flow diagram. However, other operations that are not depicted can be incorporated in the example processes that are schematically illustrated. For example, one or more additional operations can be performed before, after, simultaneously, or between any of the illustrated operations. In some circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products. Additionally, other implementations are within the scope of the following claims. In some cases, the actions recited in the claims can be performed in a different order and still achieve desirable results.

Appendix A includes an example in which a UE determines whether to perform periodic network selection based on the RPLMN and access-technology-specific criteria (referred to as Operator controlled signal threshold per access technology).

### Appendix A

### Example 1

### Periodic network selection attempts

If the Operator controlled signal threshold per access technology is not set on the USIM, a UE in Automatic Mode shall make periodic attempts to look for a higher priority PLMN including associated Access Technology of the same country as the currently received PLMN including associated Access Technology or for a higher priority PLMN including associated Access Technology that uses a Shared MCC (e.g. MCC=901). If the currently received PLMN including associated Access Technology uses a Shared MCC, also a higher priority PLMN including associated Access Technology using any non-Shared MCC shall be considered. For the ranking of PLMNs the UE shall use the order used in clause 3.2.2.2. In the case that there is no associated Access Technology identifier, the mobile shall assume that all Access Technologies provided by a PLMN are of equal priority. Moreover, periodic network selection shall not lead to change of access technology within the registered PLMN.

When a Disaster Condition is applicable, a UE in Automatic Mode that is registered to a PLMN in the "Forbidden PLMN" data field in the SIM/USIM may make periodic attempts to look for an allowable PLMN of the same country as the currently received PLMN.

In the case that the UE has stored a list of equivalent PLMNs, the UE shall only select a PLMN if it has a higher priority than all the PLMNs, in the list of equivalent PLMNs, which are of the same country as the currently registered PLMN.
NOTE 1: In the context of this 3GPP TS, the term country is to be interpreted not as a political entity but as a single Mobile Country Code (MCC). For example the USA and India have multiple MCC. Such cases are in fact treated as exceptions in the 3GPP specifications. For all other countries, multiple MCCs may be used, however the specifications have not taken this into account and there could be adverse effects such as the UE being unable to detect that multiple MCCs are within the same country.
NOTE 2: There are some situations where one MCC represents multiple political entities or where an MCC is independent of political entities. Examples include Shared MCCs, where international satellite operations typically use the Shared MCC with value 901.
NOTE 3: For the purposes of PLMN selection, the associated Access Technology using a Shared MCC is restricted to the satellite NG-RAN.

In the case that there are multiple EHPLMNs available, the UE shall not attempt to select a higher priority EHPLMN when an EHPLMN has already been selected. The priorities of EHPLMNs are only applicable when the UE is on a VPLMN and multiple EHPLMNs are available.

The UE shall only make reselection attempts while in idle mode. In case of GPRS terminals, the UE shall only make reselection attempts while in Idle or Stand-by mode. In case of terminals operating E-UTRA and/or NR, the UE shall only make reselection attempts while in Idle or RRC-Inactive mode.

In the case of a UE receiving an eMBMS transport service when in idle mode, the UE may postpone the higher priority PLMN search and any reselection attempt until the eMBMS transport service has finished or been stopped.

The interval between attempts shall be stored in the SIM/USIM.

Only the service provider shall be able to select for which of the previous situations, periodic network selection shall be attempted and to set the interval value.

For UEs supporting only Access Technologies other than the following: NB-IoT, GERAN EC-GSM-IoT and Category M1 [17] of E-UTRAN enhanced-MTC the UE shall interpret the interval value to be between 6 minutes and 8 hours, with a step size of 6 minutes.

For UEs only supporting any of the following, or a combination of, NB-IoT, GERAN EC-GSM-IoT [18], and Category M1[13] of E-UTRAN enhanced-MTC, the UE shall interpret the interval value to be between 2 and 240 hours, with a step size of 2 hours between 2 and 80 hours and a step size of 4 hours between 80 and 240 hours.

For UEs supporting a combination of IoT and non-IoT Access Technologies the UE shall interpret the interval value to determine the timer value as above based on the Access Technology currently in use by the UE.

One interval value shall be designated to indicate that no periodic attempts shall be made.

In the absence of a permitted value in the SIM/USIM, or the SIM/USIM is phase 1 and therefore does not contain the datafield, then a default value of 60 minutes, shall be used by the UE except for those UEs only supporting any of the following, or a combination of: NB-IoT, GERAN EC-GSM-IoT [18], and Category M1 [17] of E-UTRAN enhanced-MTC. For those UEs a default value of 72 hours shall be used.

NOTE: Use of values less than 60 minutes may result in excessive UE battery drain.

### Periodic network selection based on Operator controlled signal threshold criteria

If the Operator controlled signal threshold per access technology is set on the USIM, the UE shall perform the periodic network selection procedure considering all PLMNs in the same order as in clause 3.2.2.2 when the RPLMN is not a higher priority PLMN and the RPLMN's access technology signal quality is lower than the Operator controlled signal threshold per access technology.

If no PLMN, including the RPLMN, fulfils the Operator controlled signal threshold criteria, the UE shall perform the normal periodic network selection for higher priority PLMNs (as described above), without applying the Operator controlled signal threshold per access technology.

### Example 2

### Periodic network selection attempts

If the Operator controlled signal threshold per access technology is not set on the USIM, a UE in Automatic Mode shall make periodic attempts to look for a higher priority PLMN including associated Access Technology of the same country as the currently received PLMN including associated Access Technology or for a higher priority PLMN including associated Access Technology that uses a Shared MCC (e.g. MCC=901). If the currently received PLMN including associated Access Technology uses a Shared MCC, also a higher priority PLMN including associated Access Technology using any non-Shared MCC shall be considered. For the ranking of PLMNs the UE shall use the order used in clause 3.2.2.2. In the case that there is no associated Access Technology identifier, the mobile shall assume that all Access Technologies provided by a PLMN are of equal priority. Moreover, periodic network selection shall not lead to change of access technology within the registered PLMN.

When a Disaster Condition is applicable, a UE in Automatic Mode that is registered to a PLMN in the "Forbidden PLMN" data field in the SIM/USIM may make periodic attempts to look for an allowable PLMN of the same country as the currently received PLMN.

In the case that the UE has stored a list of equivalent PLMNs, the UE shall only select a PLMN if it has a higher priority than all the PLMNs, in the list of equivalent PLMNs, which are of the same country as the currently registered PLMN.
NOTE 1: In the context of this 3GPP TS, the term country is to be interpreted not as a political entity but as a single Mobile Country Code (MCC). For example the USA and India have multiple MCC. Such cases are in fact treated as exceptions in the 3GPP specifications. For all other countries, multiple MCCs may be used, however the specifications have not taken this into account and there could be adverse effects such as the UE being unable to detect that multiple MCCs are within the same country.
NOTE 2: There are some situations where one MCC represents multiple political entities or where an MCC is independent of political entities. Examples include Shared MCCs, where international satellite operations typically use the Shared MCC with value 901.
NOTE 3: For the purposes of PLMN selection, the associated Access Technology using a Shared MCC is restricted to the satellite NG-RAN.

In the case that there are multiple EHPLMNs available, the UE shall not attempt to select a higher priority EHPLMN when an EHPLMN has already been selected. The priorities of EHPLMNs are only applicable when the UE is on a VPLMN and multiple EHPLMNs are available.

The UE shall only make reselection attempts while in idle mode. In case of GPRS terminals, the UE shall only make reselection attempts while in Idle or Stand-by mode. In case of terminals operating E-UTRA and/or NR, the UE shall only make reselection attempts while in Idle or RRC-Inactive mode.

In the case of a UE receiving an eMBMS transport service when in idle mode, the UE may postpone the higher priority PLMN search and any reselection attempt until the eMBMS transport service has finished or been stopped.

The interval between attempts shall be stored in the SIM/USIM.

Only the service provider shall be able to select for which of the previous situations, periodic network selection shall be attempted and to set the interval value.

For UEs supporting only Access Technologies other than the following: NB-IoT, GERAN EC-GSM-IoT and Category M1 [17] of E-UTRAN enhanced-MTC the UE shall interpret the interval value to be between 6 minutes and 8 hours, with a step size of 6 minutes.

For UEs only supporting any of the following, or a combination of, NB-IoT, GERAN EC-GSM-IoT [18], and Category M1[13] of E-UTRAN enhanced-MTC, the UE shall interpret the interval value to be between 2 and 240 hours, with a step size of 2 hours between 2 and 80 hours and a step size of 4 hours between 80 and 240 hours.

For UEs supporting a combination of IoT and non-IoT Access Technologies the UE shall interpret the interval value to determine the timer value as above based on the Access Technology currently in use by the UE.

One interval value shall be designated to indicate that no periodic attempts shall be made.

In the absence of a permitted value in the SIM/USIM, or the SIM/USIM is phase 1 and therefore does not contain the datafield, then a default value of 60 minutes, shall be used by the UE except for those UEs only supporting any of the following, or a combination of: NB-IoT, GERAN EC-GSM-1oT [18], and Category M1 [17] of E-UTRAN enhanced-MTC. For those UEs a default value of 72 hours shall be used.

NOTE: Use of values less than 60 minutes may result in excessive UE battery drain.

### Periodic network selection based on Operator controlled signal threshold criteria

If the Operator controlled signal threshold per access technology is set on the USIM, the UE shall perform the periodic network selection procedure considering all PLMNs, of higher or lower priority than the current PLMN, in the same order as in clause 3.2.2.2, subject to the following conditions:
- the UE shall select a higher priority PLMN/access technology combination if the target PLMN's access technology signal quality is equal to or higher than the Operator controlled signal threshold per access technology.
- the UE shall select a lower priority PLMN/access technology combination only if the RPLMN's access technology signal quality is lower than the Operator controlled signal threshold per access technology, and the target PLMN's access technology signal quality is equal or higher than the Operator controlled signal threshold per access technology.
- the UE shall not perform the periodic attempts if the RPLMN is a higher priority PLMN and the RPLMN's access technology signal quality is equal or higher than the Operator controlled signal threshold per access technology.

If no PLMN, including the RPLMN, fulfils the Operator controlled signal threshold criteria, the UE shall perform the normal periodic network selection for higher priority PLMNs (as described above), without applying the Operator controlled signal threshold per access technology.

## Claims

1. A method (1100) for network selection performed by a user equipment, UE, comprising:
obtaining (1110) operator controlled signal threshold criteria that include at least a first operator controlled signal threshold for a first access technology;
selecting (1120) one or more public land mobile networks, PLMNs, that include one or more candidate cells having signal metrics satisfying network selection criteria that is based, at least in part, on the first operator controlled signal threshold for the first access technology;
registering (1130) with a first PLMN of the one or more PLMNs; and
refraining from triggering a periodic network selection attempt when the first PLMN is a Home PLMN, HPLMN, and the current signal metrics of the serving cell of the first PLMN are equal to or higher than the first operator controlled signal threshold.

2. The method of claim 1, further comprising:
selecting a cell from among the one or more candidate cells by comparing first signal metrics of the cell with the first operator controlled signal threshold; and
selecting the first PLMN based on the selecting the cell, wherein the first PLMN includes the cell and the first signal metrics exceed the first operator controlled signal threshold.

3. The method of any one of claims 1-2, further comprising:
obtaining cell-provided cell selection criteria from the one or more PLMNs, wherein the cell-provided cell selection criteria include a cell signal-level threshold, and wherein the network selection criteria is based on a combination of the first operator controlled signal threshold and the cell signal-level threshold.

4. The method of claim 3, wherein the network selection criteria include:
a first criterion based on one of a minimum, maximum, or average of the cell signal-level threshold and the first operator controlled signal threshold, and wherein the cell signal-level threshold and the first operator controlled signal threshold are for a same signal metric.

5. The method of claim 3, wherein the network selection criteria include at least:
a first criterion based on the first operator controlled signal threshold for a first signal metric; and
a second criterion based on the cell signal-level threshold for a second signal metric.

6. The method of any one of claims 1-2,
wherein the one or more PLMNs include the first PLMN when a first signal metric of at least a first candidate cell of the first PLMN satisfies the first operator controlled signal threshold,
wherein the one or more PLMNs include a second PLMN when a second signal metric of at least a second candidate cell of the second PLMN satisfies the first operator controlled signal threshold, and
wherein the one or more candidate cells include the first candidate cell and the second candidate cell.

7. The method of any one of claims 1-2, wherein the operator controlled signal threshold criteria include a second operator controlled signal threshold for a second access technology, and wherein the selecting the one or more PLMNs includes:
comparing first signal metrics for a first plurality of candidate cells of the first access technology with the first operator controlled signal threshold; and
comparing second signal metrics for a second plurality of candidate cells of the second access technology with the second operator controlled signal threshold,
wherein the one or more PLMNs include the first PLMN when the first PLMN includes at least one candidate cell of the first plurality of candidate cells having a first signal metric that satisfies the first operator controlled signal threshold; and
wherein the one or more PLMNs include a second PLMN when the second PLMN includes at least one candidate cell of the second plurality of candidate cells having a second signal metric that satisfies the second operator controlled signal threshold.

8. The method of claim 7, wherein the operator controlled signal threshold criteria do not include a third operator controlled signal threshold for a third access technology, the method further comprising excluding a third plurality of candidate cells of the third access technology from consideration when the selecting the one or more PLMNs.

9. The method of claim 7, wherein the operator controlled signal threshold criteria do not include a third operator controlled signal threshold for a third access technology, the method further comprising:
obtaining cell-provided cell selection criteria from one or more candidate cells of the third access technology, the cell-provided cell selection criteria including a cell signal-level threshold;
configuring the third operator controlled signal threshold based on the cell signal-level threshold; and
obtaining third signal metrics for a third plurality of candidate cells of the third access technology,
wherein the one or more PLMNs include a third PLMN when the first signal metrics of a third candidate cell of the third PLMN satisfy the third operator controlled signal threshold.

10. The method of claim 7, wherein the operator controlled signal threshold criteria do not include a third operator controlled signal threshold for a third access technology, the method further comprising:
obtaining cell-provided cell selection criteria from one or more candidate cells of the third access technology;
disregarding any operator controlled signal threshold criteria in the network selection criteria for the third access technology; and
configuring the network selection criteria based on a PLMN selector list and the cell-provided cell selection criteria.

11. The method of any one of claims 1-2, further comprising triggering the subsequent PLMN selection when the first PLMN has a lower priority than a second PLMN and current signal metrics of a serving cell of the first PLMN are lower than the first operator controlled signal threshold; or
further comprising disabling periodic network selection attempts when the current signal metrics of the serving cell of the first PLMN are equal to or higher than the first operator controlled signal threshold; or
further comprising enabling a timer, T, for triggering the periodic network selection attempt when a serving cell of the first PLMN has first signal metrics that no longer satisfy the first operator controlled signal threshold; and triggering the subsequent PLMN selection when the first signal metrics of the serving cell do not satisfy the first operator controlled signal threshold after an expiration of the timer; or
further comprising enabling the periodic network selection attempt for a subsequent PLMN selection when the serving cell is in a PLMN having a lower priority than the HPLMN.

12. The method of any one of claims 1-2, wherein the periodic network selection attempt includes at least one of:
if the operator controlled signal threshold criteria remain enabled at the UE, using the operator controlled signal threshold criteria for the subsequent PLMN selection, or
if the operator controlled signal threshold criteria are disabled or no longer present at the UE, using cell-provided cell selection criteria for the subsequent PLMN selection.

13. The method of claim 3, further comprising:
wherein the operator controlled signal threshold criteria further include operator controlled signal thresholds for each of a plurality of access technologies; and
wherein the selecting the PLMN includes:
when the UE is in a first area in which all candidate cells are using one of the first access technology and/or the plurality of access technologies, selecting and registering with a first PLMN of one or more PLMNs that include one or more candidate cells having signal metrics satisfying an operator controlled signal threshold for a respective access technology of the each of the one or more candidate cells, and
when the UE is in a second area in which at least one candidate cell is using an access technology for which an operator controlled signal threshold is not included in the operator controlled signal threshold criteria, selecting and registering with a second PLMN based on a PLMN prioritization and that includes the at least one candidate cell having signal metrics satisfying the cell-provided cell selection criteria.

14. The method of claim 13, further comprising upon movement of the UE from the first area to the second area or from the second area to the first area, selecting a new PLMN using the operator controlled signal threshold criteria in the first area or the cell-provided cell selection criteria in the second area; or
further comprising refraining from triggering a periodic network selection attempt to select a new PLMN when current signal metrics of a serving cell of the first PLMN are equal to or higher than the operator controlled signal threshold.

15. A User Equipment, UE, (1400) comprising:
a communication unit (1404); and
a processing system (1406) configured to control the communication unit (1404) to implement any one of the methods of claims 1-14.

## Patentansprüche

1. Verfahren (1100) zur Netzauswahl, durchgeführt von einer Benutzerausrüstung, UE (user equipment), umfassend:
Erlangen (1110) von betreibergesteuerten Signalschwellenwertkriterien, die mindestens einen ersten betreibergesteuerten Signalschwellenwert für eine erste Zugangstechnologie beinhalten;
Auswählen (1120) eines oder mehrerer öffentlicher Mobilfunknetze, PLMNs, die eine oder mehrere Kandidatenzellen beinhalten, welche Signalmetriken aufweisen, die Netzauswahlkriterien erfüllen, die zumindest teilweise auf dem ersten betreibergesteuerten Signalschwellenwert für die erste Zugangstechnologie basieren;
Registrieren (1130) bei einem ersten PLMN des einen oder der mehreren PLMNs; und
Unterlassen des Auslösens eines Versuchs einer periodischen Netzauswahl, wenn das erste PLMN ein Heimat-PLMN, HPLMN, ist und die aktuellen Signalmetriken der versorgenden Zelle des ersten PLMN gleich oder höher als der erste betreibergesteuerte Signalschwellenwert sind.

2. Verfahren nach Anspruch 1, ferner umfassend:
Auswählen einer Zelle aus der einen oder den mehreren Kandidatenzellen durch Vergleichen erster Signalmetriken der Zelle mit dem ersten betreibergesteuerten Signalschwellenwert; und
Auswählen des ersten PLMN basierend auf dem Auswählen der Zelle, wobei das erste PLMN die Zelle beinhaltet und die ersten Signalmetriken den ersten betreibergesteuerten Signalschwellenwert überschreiten.

3. Verfahren nach einem der Ansprüche 1-2, ferner umfassend:
Erlangen von zellseitig bereitgestellten Zellenauswahlkriterien von dem einen oder den mehreren PLMNs, wobei die zellseitig bereitgestellten Zellenauswahlkriterien einen Zellsignalpegel-Schwellenwert beinhalten, und wobei die Netzauswahlkriterien auf einer Kombination aus dem ersten betreibergesteuerten Signalschwellenwert und dem Zellsignalpegel-Schwellenwert basieren.

4. Verfahren nach Anspruch 3, wobei die Netzauswahlkriterien beinhalten:
ein erstes Kriterium, das auf einem Minimum, Maximum oder Durchschnitt des Zellsignalpegel-Schwellenwerts und des ersten betreibergesteuerten Signalschwellenwerts basiert, und wobei der Zellsignalpegel-Schwellenwert und der erste betreibergesteuerte Signalschwellenwert für dieselbe Signalmetrik gelten.

5. Verfahren nach Anspruch 3, wobei die Netzauswahlkriterien mindestens beinhalten:
ein erstes Kriterium, das auf dem ersten betreibergesteuerten Signalschwellenwert für eine erste Signalmetrik basiert; und
ein zweites Kriterium, das auf dem Zellsignalpegel-Schwellenwert für eine zweite Signalmetrik basiert.

6. Verfahren nach einem der Ansprüche 1-2,
wobei das eine oder die mehreren PLMNs das erste PLMN beinhalten, wenn eine erste Signalmetrik von mindestens einer ersten Kandidatenzelle des ersten PLMN den ersten betreibergesteuerten Signalschwellenwert erfüllt,
wobei das eine oder die mehreren PLMNs ein zweites PLMN beinhalten, wenn eine zweite Signalmetrik von mindestens einer zweiten Kandidatenzelle des zweiten PLMN den ersten betreibergesteuerten Signalschwellenwert erfüllt, und
wobei die eine oder die mehreren Kandidatenzellen die erste Kandidatenzelle und die zweite Kandidatenzelle beinhalten.

7. Verfahren nach einem der Ansprüche 1-2, wobei die betreibergesteuerten Signalschwellenwertkriterien einen zweiten betreibergesteuerten Signalschwellenwert für eine zweite Zugangstechnologie beinhalten, und wobei das Auswählen des einen oder der mehreren PLMNs beinhaltet:
Vergleichen erster Signalmetriken für eine erste Vielzahl von Kandidatenzellen der ersten Zugangstechnologie mit dem ersten betreibergesteuerten Signalschwellenwert; und
Vergleichen zweiter Signalmetriken für eine zweite Vielzahl von Kandidatenzellen der zweiten Zugangstechnologie mit dem zweiten betreibergesteuerten Signalschwellenwert,
wobei das eine oder die mehreren PLMNs das erste PLMN beinhalten, wenn das erste PLMN mindestens eine Kandidatenzelle der ersten Vielzahl von Kandidatenzellen beinhaltet, die eine erste Signalmetrik aufweist, welche den ersten betreibergesteuerten Signalschwellenwert erfüllt; und
wobei das eine oder die mehreren PLMNs ein zweites PLMN beinhalten, wenn das zweite PLMN mindestens eine Kandidatenzelle der zweiten Vielzahl von Kandidatenzellen beinhaltet, die eine zweite Signalmetrik aufweist, welche den zweiten betreibergesteuerten Signalschwellenwert erfüllt.

8. Verfahren nach Anspruch 7, wobei die betreibergesteuerten Signalschwellenwertkriterien keinen dritten betreibergesteuerten Signalschwellenwert für eine dritte Zugangstechnologie beinhalten, wobei das Verfahren ferner umfasst Ausschließen einer dritten Vielzahl von Kandidatenzellen der dritten Zugangstechnologie von der Berücksichtigung beim Auswählen des einen oder der mehreren PLMNs.

9. Verfahren nach Anspruch 7, wobei die betreibergesteuerten Signalschwellenwertkriterien keinen dritten betreibergesteuerten Signalschwellenwert für eine dritte Zugangstechnologie beinhalten, wobei das Verfahren ferner umfasst:
Erlangen von zellseitig bereitgestellten Zellenauswahlkriterien von einer oder mehreren Kandidatenzellen der dritten Zugangstechnologie, wobei die zellseitig bereitgestellten Zellenauswahlkriterien einen Zellsignalpegel-Schwellenwert beinhalten;
Konfigurieren des dritten betreibergesteuerten Signalschwellenwerts basierend auf dem Zellsignalpegel-Schwellenwert; und
Erlangen dritter Signalmetriken für eine dritte Vielzahl von Kandidatenzellen der dritten Zugangstechnologie,
wobei das eine oder die mehreren PLMNs ein drittes PLMN beinhalten, wenn die ersten Signalmetriken einer dritten Kandidatenzelle des dritten PLMN den dritten betreibergesteuerten Signalschwellenwert erfüllen.

10. Verfahren nach Anspruch 7, wobei die betreibergesteuerten Signalschwellenwertkriterien keinen dritten betreibergesteuerten Signalschwellenwert für eine dritte Zugangstechnologie beinhalten, wobei das Verfahren ferner umfasst:
Erlangen von zellseitig bereitgestellten Zellenauswahlkriterien von einer oder mehreren Kandidatenzellen der dritten Zugangstechnologie;
Nichtberücksichtigen jeglicher betreibergesteuerter Signalschwellenwertkriterien in den Netzauswahlkriterien für die dritte Zugangstechnologie; und
Konfigurieren der Netzauswahlkriterien basierend auf einer PLMN-Auswahlliste und den zellseitig bereitgestellten Zellenauswahlkriterien.

11. Verfahren nach einem der Ansprüche 1-2, ferner umfassend Auslösen der nachfolgenden PLMN-Auswahl, wenn das erste PLMN eine niedrigere Priorität als ein zweites PLMN hat und aktuelle Signalmetriken einer versorgenden Zelle des ersten PLMN niedriger als der erste betreibergesteuerte Signalschwellenwert sind; oder ferner umfassend Deaktivieren von Versuchen einer periodischen Netzauswahl, wenn die aktuellen Signalmetriken der versorgenden Zelle des ersten PLMN gleich oder höher als der erste betreibergesteuerte Signalschwellenwert sind; oder
ferner umfassend Aktivieren eines Timers, T, zum Auslösen des Versuchs einer periodischen Netzauswahl, wenn eine versorgende Zelle des ersten PLMN erste Signalmetriken aufweist, die den ersten betreibergesteuerten Signalschwellenwert nicht länger erfüllen; und Auslösen der nachfolgenden PLMN-Auswahl, wenn die ersten Signalmetriken der versorgenden Zelle den ersten betreibergesteuerten Signalschwellenwert nach einem Ablauf des Timers nicht erfüllen; oder
ferner umfassend Aktivieren des Versuchs einer periodischen Netzauswahl für eine nachfolgende PLMN-Auswahl, wenn die versorgende Zelle in einem PLMN mit einer niedrigeren Priorität als das HPLMN liegt.

12. Verfahren nach einem der Ansprüche 1-2, wobei der Versuch einer periodischen Netzauswahl mindestens eines der Folgenden beinhaltet:
falls die betreibergesteuerten Signalschwellenwertkriterien an der UE aktiviert bleiben, Verwenden der betreibergesteuerten Signalschwellenwertkriterien für die nachfolgende PLMN-Auswahl, oder
falls die betreibergesteuerten Signalschwellenwertkriterien an der UE deaktiviert oder nicht mehr vorhanden sind, Verwenden von zellseitig bereitgestellten Zellenauswahlkriterien für die nachfolgende PLMN-Auswahl.

13. Verfahren nach Anspruch 3, ferner umfassend:
wobei die betreibergesteuerten Signalschwellenwertkriterien ferner betreibergesteuerte Signalschwellenwerte für jede einer Vielzahl von Zugangstechnologien beinhalten; und
wobei das Auswählen des PLMN beinhaltet:
wenn sich die UE in einem ersten Bereich befindet, in dem alle Kandidatenzellen eine der ersten Zugangstechnologie und/oder der Vielzahl von Zugangstechnologien verwenden, Auswählen und Registrieren bei einem ersten PLMN von einem oder mehreren PLMNs, die eine oder mehrere Kandidatenzellen beinhalten, welche Signalmetriken aufweisen, die einen betreibergesteuerten Signalschwellenwert für eine jeweilige Zugangstechnologie jeder der einen oder mehreren Kandidatenzellen erfüllen, und
wenn sich die UE in einem zweiten Bereich befindet, in dem mindestens eine Kandidatenzelle eine Zugangstechnologie verwendet, für die kein betreibergesteuerter Signalschwellenwert in den betreibergesteuerten Signalschwellenwertkriterien enthalten ist, Auswählen und Registrieren bei einem zweiten PLMN basierend auf einer PLMN-Priorisierung, und das die mindestens eine Kandidatenzelle beinhaltet, welche Signalmetriken aufweist, die die zellseitig bereitgestellten Zellenauswahlkriterien erfüllen.

14. Verfahren nach Anspruch 13, ferner umfassend bei Bewegung der UE vom ersten Bereich in den zweiten Bereich oder vom zweiten Bereich in den ersten Bereich, Auswählen eines neuen PLMN unter Verwendung der betreibergesteuerten Signalschwellenwertkriterien im ersten Bereich oder der zellseitig bereitgestellten Zellenauswahlkriterien im zweiten Bereich; oder
ferner umfassend Unterlassen des Auslösens eines Versuchs einer periodischen Netzauswahl zum Auswählen eines neuen PLMN, wenn aktuelle Signalmetriken einer versorgenden Zelle des ersten PLMN gleich oder höher als der betreibergesteuerte Signalschwellenwert sind.

15. Benutzerausrüstung, UE, (1400), umfassend:
eine Kommunikationseinheit (1404); und
ein Verarbeitungssystem (1406), das dafür konfiguriert ist, die Kommunikationseinheit (1404) so zu steuern, dass sie eines der Verfahren der Ansprüche 1-14 implementiert.

## Revendications

1. Procédé (1100) de sélection de réseau réalisé par un équipement utilisateur, UE, comprenant :
l'obtention (1110) de critères de seuil de signal commandés par un opérateur qui comportent au moins un premier seuil de signal commandé par un opérateur pour une première technologie d'accès ;
la sélection (1120) d'un ou plusieurs réseaux mobiles terrestres publics, PLMN, qui comportent une ou plusieurs cellules candidates ayant des métriques de signal satisfaisant à des critères de sélection de réseau qui sont basés, au moins en partie, sur le premier seuil de signal commandé par un opérateur pour la première technologie d'accès ;
l'enregistrement (1130) auprès d'un premier PLMN des un ou plusieurs PLMN ; et
le fait de s'abstenir de déclencher une tentative de sélection de réseau périodique lorsque le premier PLMN est un PLMN domestique, HPLMN, et que les métriques de signal actuelles de la cellule de desserte du premier PLMN sont égales ou supérieures au premier seuil de signal commandé par un opérateur.

2. Procédé selon la revendication 1, comprenant également :
la sélection d'une cellule parmi les une ou plusieurs cellules candidates en comparant de premières métriques de signal de la cellule avec le premier seuil de signal commandé par un opérateur ; et
la sélection du premier PLMN sur la base de la sélection de la cellule, dans lequel le premier PLMN comporte la cellule et les premières métriques de signal dépassent le premier seuil de signal commandé par un opérateur.

3. Procédé selon l'une quelconque des revendications 1 et 2, comprenant également :
l'obtention de critères de sélection de cellule fournis par la cellule auprès des un ou plusieurs PLMN, dans lequel les critères de sélection de cellule fournis par la cellule comportent un seuil de niveau de signal de cellule, et dans lequel les critères de sélection de réseau sont basés sur une combinaison du premier seuil de signal commandé par un opérateur et du seuil de niveau de signal de cellule.

4. Procédé selon la revendication 3, dans lequel les critères de sélection de réseau comportent :
un premier critère sur la base de l'un d'un minimum, d'un maximum, ou d'une moyenne du seuil de niveau de signal de cellule et du premier seuil de signal commandé par un opérateur, et dans lequel le seuil de niveau de signal de cellule et le premier seuil de signal commandé par un opérateur concernent une même métrique de signal.

5. Procédé selon la revendication 3, dans lequel les critères de sélection de réseau comportent au moins :
un premier critère sur la base du premier seuil de signal commandé par un opérateur pour une première métrique de signal ; et
un second critère sur la base du seuil de niveau de signal de cellule pour une deuxième métrique de signal.

6. Procédé selon l'une quelconque des revendications 1 et 2,
dans lequel les un ou plusieurs PLMN comportent le premier PLMN lorsqu'une première métrique de signal d'au moins une première cellule candidate du premier PLMN satisfait au premier seuil de signal commandé par un opérateur,
dans lequel les un ou plusieurs PLMN comportent un deuxième PLMN lorsqu'une deuxième métrique de signal d'au moins une seconde cellule candidate du deuxième PLMN satisfait au premier seuil de signal commandé par un opérateur, et
dans lequel les une ou plusieurs cellules candidates comportent la première cellule candidate et la seconde cellule candidate.

7. Procédé selon l'une quelconque des revendications 1 et 2, dans lequel les critères de seuil de signal commandés par un opérateur comportent un deuxième seuil de signal commandé par un opérateur pour une seconde technologie d'accès, et dans lequel la sélection des un ou plusieurs PLMN comporte :
la comparaison de premières métriques de signal pour une première pluralité de cellules candidates de la première technologie d'accès avec le premier seuil de signal commandé par un opérateur ; et
la comparaison de deuxièmes métriques de signal pour une deuxième pluralité de cellules candidates de la deuxième technologie d'accès avec le deuxième seuil de signal commandé par un opérateur,
dans lequel les un ou plusieurs PLMN comportent le premier PLMN lorsque le premier PLMN comporte au moins une cellule candidate de la première pluralité de cellules candidates ayant une première métrique de signal qui satisfait au premier seuil de signal commandé par un opérateur ; et
dans lequel les un ou plusieurs PLMN comportent un deuxième PLMN lorsque le deuxième PLMN comporte au moins une cellule candidate de la deuxième pluralité de cellules candidates ayant une deuxième métrique de signal qui satisfait au deuxième seuil de signal commandé par un opérateur.

8. Procédé selon la revendication 7, dans lequel les critères de seuil de signal commandés par un opérateur ne comportent pas un troisième seuil de signal commandé par un opérateur pour une troisième technologie d'accès, le procédé comprenant également l'exclusion d'une troisième pluralité de cellules candidates de la troisième technologie d'accès de la considération lors de la sélection des un ou plusieurs PLMN.

9. Procédé selon la revendication 7, dans lequel les critères de seuil de signal commandés par un opérateur ne comportent pas un troisième seuil de signal commandé par un opérateur pour une troisième technologie d'accès, le procédé comprenant également :
l'obtention de critères de sélection de cellule fournis par la cellule à partir d'une ou de plusieurs cellules candidates de la troisième technologie d'accès, les critères de sélection de cellule fournis par la cellule comportant un seuil de niveau de signal de cellule ;
la configuration du troisième seuil de signal commandé par un opérateur sur la base du seuil de niveau de signal de cellule ; et
l'obtention de troisièmes métriques de signal pour une troisième pluralité de cellules candidates de la troisième technologie d'accès,
dans lequel les un ou plusieurs PLMN comportent un troisième PLMN lorsque les premières métriques de signal d'une troisième cellule candidate du troisième PLMN satisfont au troisième seuil de signal commandé par un opérateur.

10. Procédé selon la revendication 7, dans lequel les critères de seuil de signal commandés par un opérateur ne comportent pas un troisième seuil de signal commandé par un opérateur pour une troisième technologie d'accès, le procédé comprenant également :
l'obtention de critères de sélection de cellule fournis par la cellule à partir d'une ou de plusieurs cellules candidates de la troisième technologie d'accès ;
le fait de ne pas tenir compte de critères de seuil de signal commandés par un opérateur dans les critères de sélection de réseau pour la troisième technologie d'accès ; et
la configuration des critères de sélection de réseau sur la base d'une liste de sélecteurs PLMN et des critères de sélection de cellule fournis par la cellule.

11. Procédé selon l'une quelconque des revendications 1 et 2, comprenant également le déclenchement de la sélection PLMN ultérieure lorsque le premier PLMN a une priorité inférieure à un deuxième PLMN et que les métriques de signal actuelles d'une cellule de desserte du premier PLMN sont inférieures au premier seuil de signal commandé par un opérateur ; ou comprenant également la désactivation de tentatives de sélection de réseau périodiques lorsque les métriques de signal actuelles de la cellule de desserte du premier PLMN sont égales ou supérieures au premier seuil de signal commandé par un opérateur ; ou
comprenant également l'activation d'un minuteur, T, pour déclencher la tentative de sélection de réseau périodique lorsqu'une cellule de desserte du premier PLMN a des premières métriques de signal qui ne satisfont plus au premier seuil de signal commandé par un opérateur ; et le déclenchement de la sélection PLMN ultérieure lorsque les premières métriques de signal de la cellule de desserte ne satisfont pas au premier seuil de signal commandé par un opérateur après l'expiration du minuteur ; ou
comprenant également l'activation de la tentative de sélection de réseau périodique pour une sélection PLMN ultérieure lorsque la cellule de desserte se trouve dans un PLMN ayant une priorité inférieure à celle du HPLMN.

12. Procédé selon l'une quelconque des revendications 1 et 2, dans lequel la tentative de sélection de réseau périodique comporte au moins un des éléments suivants :
si les critères de seuil de signal commandés par un opérateur restent activés au niveau de l'UE, l'utilisation des critères de seuil de signal commandés par un opérateur pour la sélection PLMN ultérieure, ou
si les critères de seuil de signal commandés par un opérateur sont désactivés ou ne sont plus présents au niveau de l'UE, l'utilisation de critères de sélection de cellule fournis par la cellule pour la sélection PLMN ultérieure.

13. Procédé selon la revendication 3, comprenant également :
dans lequel les critères de seuil de signal commandés par un opérateur comportent également des seuils de signal commandés par un opérateur pour chacune d'une pluralité de technologies d'accès ; et
dans lequel la sélection du PLMN comporte:
lorsque l'UE se trouve dans une première zone dans laquelle toutes les cellules candidates utilisent l'une de la première technologie d'accès et/ou de la pluralité de technologies d'accès, la sélection et l'enregistrement auprès d'un premier PLMN d'un ou plusieurs PLMN qui comportent une ou plusieurs cellules candidates ayant des métriques de signal satisfaisant à un seuil de signal commandé par un opérateur pour une technologie d'accès respective de chacune des une ou plusieurs cellules candidates, et
lorsque l'UE se trouve dans une seconde zone dans laquelle au moins une cellule candidate utilise une technologie d'accès pour laquelle un seuil de signal commandé par un opérateur n'est pas inclus dans les critères de seuil de signal commandés par un opérateur, la sélection et l'enregistrement auprès d'un deuxième PLMN sur la base d'une priorisation PLMN et qui comporte l'au moins une cellule candidate ayant des métriques de signal satisfaisant aux critères de sélection de cellule fournis par la cellule.

14. Procédé selon la revendication 13, comprenant également lors du déplacement de l'UE de la première zone à la seconde zone ou de la seconde zone à la première zone, la sélection d'un nouveau PLMN à l'aide des critères de seuil de signal commandés par un opérateur dans la première zone ou des critères de sélection de cellule fournis par la cellule dans la seconde zone ; ou
comprenant également le fait de s'abstenir de déclencher une tentative de sélection de réseau périodique pour sélectionner un nouveau PLMN lorsque des métriques de signal actuelles d'une cellule de desserte du premier PLMN sont égales ou supérieures au seuil de signal commandé par un opérateur.

15. Équipement utilisateur, UE, (1400) comprenant :
une unité de communication (1404) ; et
un système de traitement (1406) configuré pour commander l'unité de communication (1404) pour mettre en œuvre l'un quelconque des procédés selon les revendications 1 à 14.
